# EUROPEAN PATENT SPECIFICATION

(11) **EP 3 150 471 B1**
(45) Date of publication and mention of the grant of the patent: **11.09.2019**
(21) Application number: 16191187.0
(22) Date of filing: 28.09.2016
(51) Int. Cl.: B62J 17/04

(54) **WINDSHIELD FOR VEHICLE**
WINDSCHILD FÜR FAHRZEUG
PARE-BRISE POUR VÉHICULE

(30) Priority: 30.09.2015 JP 2015193043; 10.06.2016 JP 2016116012
(43) Date of publication of application: 05.04.2017
(73) Proprietor: Honda Motor Co., Ltd., Minato-ku Tokyo 107-8556 (JP)
(72) Inventor: NAGAYAMA, Masashi, Wako-shi, Saitama 351-0193 (JP); SUGIO, Takafumi, Wako-shi, Saitama 351-0193 (JP); KISHI, Hiroshi, Wako-shi, Saitama 351-0193 (JP); KIYOTA, Shintaro, Wako-shi, Saitama 351-0193 (JP); MURAKI, Yuhei, Wako-shi, Saitama 351-0193 (JP); ITO, Michio, Wako-shi, Saitama 351-0193 (JP); NAKAGAWA, Hideaki, Wako-shi, Saitama 351-0193 (JP)
(74) Representative: Piésold, Alexander James

(56) References cited:
- EP-A2- 0 114 144
- GB-A- 701 934
- GB-A- 2 263 259
- JP-U- S59 111 779
- US-A- 4 166 650
- US-A- 4 168 098
- US-A1- 2011 101 724

## Description

The present invention relates to a screen device and a vehicle.

Conventionally, there has been known a wind screen which is fixed to a fixing portion integrally formed with a frame member on a vehicle body side of a vehicle (see JP-A-2009-226961, for example).

The above-mentioned fixing portion of the wind screen is integrally formed with the frame member. Due to such structure, in changing the configuration of the vehicle from the vehicle equipped with the wind screen to the vehicle not equipped with the wind screen, it takes a considerable time for a maintenance operation. Accordingly, there has been a demand for improving efficiency of the maintenance operation.

US 4168098, which is considered as the closest prior art, discloses a windshield assembly wherein a lower portion of a windshield panel is attached to a motorcycle and an upper portion of the windshield panel is attached to mounting rods. The mounting rods are threadedly engaged with clamps on the handlebars of the motorcycle.

It is an object of at least the preferred embodiments of the present invention to provide a screen device and a vehicle where a wind screen can be easily detachably mounted.

In a first aspect, the present invention provides a screen device comprising a pair of left and right stays which is configured to be joined to left and right brackets of a vehicle; and a wind screen which is fixed to the left and right stays, wherein the left and right stays and the left and right brackets are joined to each other by inserting either one of the left and right stays or the left and right brackets into the corresponding counterpart of the left and right stays or the left and right brackets, each stay includes a screen fixing portion to which the wind screen is fixed, the screen fixing portion comprising a lower fastening portion and an upper fastening portion, wherein the lower fastening portion and the upper fastening portion are disposed such that front ends of the lower fastening portion and the upper fastening portion are directed sideward with respect to a front side of the wind screen, and the left and right stays are supported in an inverted chevron shape as viewed in a front view by the left and right brackets.

In the above-mentioned configuration, the left and right brackets and the stays may respectively include threaded portions which are respectively threadedly joined to each other, and either one of the bracket or the stay may be threadedly joined to and inserted into the corresponding counterpart of the bracket or the stay.

In the above-mentioned configuration, either one of the left and right brackets or the stays may include a fixing member which prevents loosening of the threaded joining between the left and right brackets and the stays.

In the above-mentioned configuration, the stays and the brackets may include a locking mechanism which restricts movement of the stays or the brackets in the direction that the stays or the brackets are inserted and removed.

In the above-mentioned configuration, each bracket may be formed into a cylindrical shape so as to allow insertion of the stay into the bracket, and may be supported by a side plate which extends from a vehicle body side of the vehicle.

In the above-mentioned configuration, each bracket may include: a fixing portion which is configured to be fixed to a vehicle body side of the vehicle; an insertion receiving portion which extends from the fixing portion and is configured to allow insertion of the stay into the insertion receiving portion; and a side wall portion which extends from the fixing portion and is configured to be joined to the insertion receiving portion on a lateral side of the wind screen.

In the above-mentioned configuration, the fixing portions of the left and right brackets may be disposed so as to gradually expand sideward as the fixing portions extend toward a front side of the wind screen as viewed in a plan view.

In a second aspect, the present invention provides a vehicle comprising: a pair of left and right brackets and a screen device according to the above-mentioned first aspect, wherein the left and right brackets are fixed to support members disposed on a vehicle body side of the vehicle, and the lower fastening portion and the upper fastening portion are disposed such that front ends of the lower fastening portion and the upper fastening portion are directed outward in the vehicle width direction with respect to a front side in the longitudinal direction of the vehicle.

In the above-mentioned configuration, the support member may be a handle or a pedestal fixed to the handle, and the bracket may be disposed in a handle cover which is mounted on the handle and covers the handle.

In the above-mentioned configuration, the left and right brackets and the stays may respectively include threaded portions which are respectively threadedly joined to each other, and either one of the bracket or the stay may be threadedly joined to and inserted into the corresponding counterpart of the bracket or the stay.

In the above-mentioned configuration, either one of the left and right brackets or the stays may include a fixing member which prevents loosening of the threaded joining between the left and right brackets and the stays.

In the above-mentioned configuration, the stays and the brackets may include a locking mechanism which restricts movement of the stays or the brackets in the direction that the stays or the brackets are inserted and removed.

In the above-mentioned configuration, each bracket may be formed into a cylindrical shape so as to allow insertion of the stay into the bracket, and may be supported by a side plate which extends from a vehicle body side of the vehicle.

In the above-mentioned configuration, each bracket may include: a fixing portion which is configured to be fixed to a vehicle body side of the vehicle; an insertion receiving portion which extends from the fixing portion and is configured to allow insertion of the stay into the insertion receiving portion; and a side wall portion which extends from the fixing portion and is configured to be joined to the insertion receiving portion on a lateral side of the wind screen.

In the above-mentioned configuration, the fixing portions of the left and right brackets may be disposed so as to gradually expand toward the outside in the vehicle width direction as the fixing portions extend toward a front side in the longitudinal direction of the vehicle as viewed in a plan view.

In the above-mentioned configuration, the handle cover which covers the left and right brackets may form a vehicle body cover, and the handle cover may include an opening portion which allows insertion of the stay therethrough, and a sub cover which closes the opening portion.

According to a first aspect of the present invention, the left and right stays and the left and right brackets are joined to each other by inserting either one of the left and right stays or the left and right brackets into the corresponding counterpart of the left and right stays or the left and right brackets and hence, it is sufficient to insert the stays into the brackets and to fix the wind screen to the stays. Accordingly, it is unnecessary to provide the particular structure for fixing the stays to the brackets and particular members for fixing the stays to the brackets and hence, the structure is simple whereby the wind screen can be easily mounted and removed.

Further, the left and right stays are supported in an inverted chevron shape as viewed in a front view by the left and right brackets. Accordingly, by merely inserting the stays into the brackets and fixing the wind screen to the stays, it is possible to prevent the stays from being removed from the brackets.

Further, each stay includes the screen fixing portion to which the wind screen is fixed, and the screen fixing portion may be disposed such that the front end of the screen fixing portion is directed sideward with respect to a front side of the wind screen. Accordingly, there is no possibility that a field of view is obstructed by the screen fixing portion and hence, the field of view through the wind screen can be ensured and, further, the wind screen can be firmly supported in the vehicle longitudinal direction and in the vehicle width direction.

The left and right brackets and the stays respectively may include threaded portions which are respectively threadedly joined to each other, and either one of the bracket or the stay may be threadedly joined to and inserted into the corresponding counterpart of the bracket or the stay. Accordingly, it is possible to prevent the removal of the stay from the bracket. Further, the stay can be firmly joined to the left and right bracket by threaded joining.

Either one of the left and right brackets or the stays may include the fixing member which prevents loosening of the threaded joining between the left and right brackets and the stays and hence, the stays can be further firmly fixed to the left and right brackets by the fixing member.

The stays and the brackets may include the locking mechanism which restricts movement of the stays or the brackets in the direction that the stays or the brackets are inserted and removed. Accordingly, it is possible to further effectively prevent the stays from being removed from the brackets by the locking mechanism.

Further, each bracket may be formed into a cylindrical shape so as to allow insertion of the stay into the bracket, and may be supported by the side plate which extends from the vehicle body side of the vehicle. Accordingly, the strength and rigidity of the brackets can be increased by supporting the brackets by the side plates and hence, the wind screen can be firmly supported.

Each bracket may include: the fixing portion which is configured to be fixed to the vehicle body side of the vehicle; the insertion receiving portion which extends from the fixing portion and is configured to allow insertion of the stay into the insertion receiving portion; and the side wall portion which extends from the fixing portion and is configured to be joined to the insertion receiving portion on the lateral side of the wind screen. Accordingly, the insertion receiving portions can be supported by the side wall portions and hence, the strength and rigidity of the brackets can be increased whereby the wind screen can be firmly supported.

Further, the fixing portions of the left and right brackets may be disposed so as to gradually expand sideward as the fixing portions extend toward a front side of the wind screen as viewed in a plan view. Accordingly, a wide space can be ensured between the left and right brackets and hence, parts can be easily disposed in the space. Further, it is possible to firmly support the wind screen which receives a traveling wind from a front side.

According to the second aspect of the present invention, the left and right brackets are fixed to the support member disposed on the vehicle body side of the vehicle, and the left and right stays and the left and right brackets are joined to each other by inserting either one of the left and right stays or the left and right brackets into the corresponding counterpart of the left and right stays or the left and right brackets. Therefore, it is sufficient to insert the stays into the brackets and to fix the wind screen to the stays. Accordingly, it is unnecessary to provide the particular structure for fixing the stays to the brackets and particular members for fixing the stays to the brackets. Still further, the structure is simple and hence, the wind screen can be easily mounted and removed.

The left and right stays are supported in an inverted chevron shape as viewed in a front view by the left and right brackets. As a result, by merely inserting the stays into the brackets and fixing the wind screen to the stays, it is possible to prevent the stays from being removed from the brackets.

Further, each stay includes the screen fixing portion to which the wind screen is fixed, and the screen fixing portion may be disposed such that the front end of the screen fixing portion is directed outward in the vehicle width direction with respect to a front side in the longitudinal direction of the vehicle. Accordingly, there is no possibility that a field of view is obstructed by the screen fixing portion and hence, the field of view through the wind screen can be ensured and, at the same time, the wind screen can be firmly supported in a vehicle longitudinal direction and in the vehicle width direction.

The support member may be the handle or the pedestal which is fixed to the handle, and the bracket may be disposed in the handle cover which is mounted on the handle and covers the handle and hence, the external appearance can be enhanced.

The left and right brackets and the stays respectively may include the threaded portions which are respectively threadedly joined to each other, and either one of the bracket or the stay may be threadedly joined to and inserted into the corresponding counterpart of the bracket or the stay. Accordingly, it is possible to prevent the removal of the stay from the bracket. Further, the stay can be firmly joined to the left and right brackets by threaded joining.

Either one of the left and right brackets or the stays may include the fixing member which prevents loosening of the threaded joining between the left and right brackets and the stays. Accordingly, the stays can be further firmly fixed to the left and right brackets by the fixing member.

The stays and the brackets may include the locking mechanism which restricts movement of the stays or the brackets in the direction that the stays or the brackets are inserted and removed. Accordingly, it is possible to further effectively prevent the removal of the stay from the bracket by the locking mechanism.

Further, each bracket may be formed into a cylindrical shape so as to allow insertion of the stay into the bracket, and may be supported by the side plate which extends from the vehicle body side of the vehicle. Accordingly, the strength and rigidity of the brackets can be increased by supporting the brackets by the side plates and hence, the wind screen can be firmly supported.

Each bracket may include: the fixing portion which is configured to be fixed to the vehicle body side of the vehicle; the insertion receiving portion which extends from the fixing portion and is configured to allow insertion of the stay into the insertion receiving portion; and the side wall portion which extends from the fixing portion and is configured to be joined to the insertion receiving portion on the lateral side of the wind screen. Accordingly, the cylindrical portions can be supported by the side wall portions and hence, the strength and rigidity of the brackets can be increased whereby the wind screen can be firmly supported.

The fixing portions of the left and right brackets may be disposed so as to gradually expand toward the outside in the vehicle width direction as the fixing portions extend toward a front side in the longitudinal direction of the vehicle as viewed in a plan view. Accordingly, a wide space can be ensured between the left and right brackets and hence, parts can be easily disposed in the space.

The handle cover which covers the left and right brackets may form the vehicle body cover, and the handle cover may include the opening portion which allows insertion of the stay therethrough, and the sub cover which closes the opening portion. Accordingly, by removing the sub cover, the wind screen can be easily detachably mounted through the opening portion.

Embodiments of the present invention are explained below by way of example and with reference to drawings.
Fig. 1 is a left side view of a motorcycle equipped with a screen device according to a first embodiment of the present invention.
Fig. 2 is a front view showing an upper portion of a front portion of the motorcycle.
Fig. 3 is a front view showing a state where a wind screen is omitted from the configuration shown in Fig. 2.
Fig. 4 is a plan view showing a front portion of a vehicle body of the motorcycle in a state where the wind screen is removed.
Fig. 5 is a front view showing a state where a front side of a handle cover and a stay cover are removed from the configuration shown in Fig. 3.
Fig. 6 is a back view showing a steering handle and left and right bracket bodies.
Fig. 7 is a plan view showing a center portion of the steering handle and the left and right bracket bodies.
Fig. 8 is a left side view showing the steering handle and the bracket body.
Fig. 9 is a cross-sectional view showing the joint structure between the screen stays and a screen support bracket.
Fig. 10 is a view showing the screen stay as viewed from a side.
Fig. 11 contains views showing a first cover which forms a stay cover, wherein Fig. 11A is a front view of the first cover, and Fig. 11B is a left side view of the first cover.
Fig. 12 contains views showing a second cover which forms a stay cover, wherein Fig. 12A is a front view of the second cover, and Fig. 12B is a left side view of the second cover.
Fig. 13 is a cross-sectional view showing the joint structure between the screen stays and a screen support bracket (another embodiment shown in Fig. 9).
Fig. 14 is a cross-sectional view showing the joint structure between a screen stay and a screen support bracket according to a second embodiment.
Fig. 15 is a cross-sectional view showing the joint structure between a screen stay and a screen support bracket according to a third embodiment.
Fig. 16 is a front view showing an upper portion of a front portion of a motorcycle provided with a screen stay according to a fourth embodiment.
Fig. 17 is a front view showing a state where the wind screen is omitted from the configuration shown in Fig. 16.
Fig. 18 is a plan view showing a front portion of the vehicle body of the motorcycle.
Fig. 19 is a front view showing a state where a handle cover and parts around the handle cover are removed from the configuration shown in Fig. 17.
Fig. 20 contains explanatory views showing a joined state between a screen support bracket mounted on a left side of a steering handle and a screen stay, wherein Fig. 20A is a view of a screen support bracket and a screen stay as viewed from a right oblique front side of the vehicle, and Fig. 20B is an enlarged view of a main part of the configuration shown in Fig. 20A.
Fig. 21 contains explanatory views for explaining a locking mechanism, wherein Fig. 21A is a front view showing a locking mechanism, and Fig. 21B is a front view showing a locking notch of the screen stay, and Fig. 21C is a cross-sectional view taken along a line C-C in Fig. 21A.
Fig. 22 is an operational view showing the manner of assembling a screen assembly in a fourth embodiment.
Fig. 23 is a front view showing a motorcycle equipped with a screen device according to a fifth embodiment.
Fig. 24 is an enlarged view of a main part of the configuration shown in Fig. 23.
Fig. 25 is a cross-sectional view of a handle cover taken at the same position as a line XXV-XXV in Fig. 16.
Fig. 26 is an operational view showing the manner of assembling a screen assembly according to the fifth embodiment.

In the explanation, the directions such as "frontward", "rearward", "leftward", "rightward", "upward" and "downward" are equal to corresponding directions with respect to a vehicle body unless otherwise described. Further, in the respective drawings, symbol FR indicates a front side in the longitudinal direction of the vehicle, symbol UP indicates an upper side of a vehicle body, and symbol LH indicates a left side of the vehicle body.

### <First embodiment>

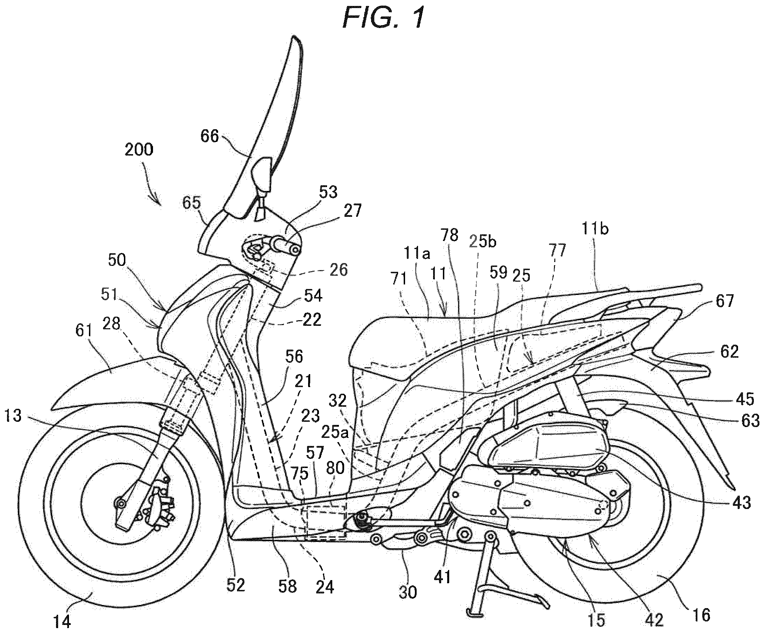

Fig. 1 is a left side view of a motorcycle 200 equipped with a screen device according to the first embodiment of the present invention.

The motorcycle 200 is a scooter-type saddle-ride-type vehicle which includes: a rider's seat 11; and a low-floor floor step 12 on which a rider seated on the seat 11 places his feet. The motorcycle 200 includes: a vehicle body frame 21; a front wheel 14 which is supported on the vehicle body frame 21 by way of a front fork 13; a power unit 15 of a unit-swing-type supported on the vehicle body frame 21; and a rear wheel 16 which is supported on a rear end portion of the power unit 15.

The vehicle body frame 21 includes: a head pipe 22; one down frame 23 which extends rearward and downward from the head pipe 22; a pair of left and right lower frames 24 which extends leftward and rightward from a lower portion of the down frame 23 and subsequently extends rearward in a straight manner; and a pair of left and right rear frames 25 which extends integrally rearward and upward from rear ends of the left and right lower frames 24.

The head pipe 22 rotatably supports a steering stem 26. The steering stem 26 forms the front fork 13 jointly with a bottom bridge 28 formed on a lower portion of the steering stem 26, a steering handle 27 is mounted on an upper portion of the steering stem 26, and the front wheel 14 is supported on a lower end portion of the front fork 13 by way of an axle. With such a configuration, the front wheel 14 is steered leftward and rightward by steering the steering handle 27 leftward and rightward.

As viewed in a side view of the vehicle body, the lower frames 24 extend rearward approximately horizontally from a lower portion of the down frame 23, and form a lowermost frame portion of the vehicle body frame 21. The left and right lower frames 24 support the floor step 12, and the power unit 15 is supported in a vertically swingable manner by rear end portions of the left and right lower frames 24 by way of a link mechanism 30. By supporting the floor step 12 by the left and right lower frames 24, it is possible to support the floor step 12 at a low position behind the steering handle 27 and in front of the seat 11 with sufficient support rigidity.

The power unit 15 is supported by rear end portions of the left and right lower frames 24 by way of the link mechanism 30.

A cross frame 32 having a curved shape and projecting frontward is mounted on respective front portions 25a of the left and right rear frames 25 extending obliquely upward from rear ends of the left and right lower frames 24. Frame rigidity around the front portions 25a of the left and right rear frames 25 is enhanced by the cross frame 32.

The power unit 15 is formed of: an engine 41; and a continuously variable transmission 42 integrally mounted on a rear portion of the engine 41. The continuously variable transmission 42 is positioned on a left side of the rear wheel 16, and an air cleaner 43 which forms an intake system is disposed above the continuously variable transmission 42. An exhaust muffler is connected to the engine 41 by way of an exhaust pipe not shown in the drawing. The exhaust muffler is disposed on a side opposite to the continuously variable transmission 42 with the rear wheel 16 sandwiched between the exhaust muffler and the continuously variable transmission 42. That is, the exhaust muffler is disposed on a right side of the rear wheel 16. A rear cushion unit 45 is disposed between the power unit 15 and a rear portion 25b of one rear frame 25.

The motorcycle 200 includes a vehicle body cover 50 which covers the vehicle body frame 21 and the like. The vehicle body cover 50 includes: a front cover 51 which covers a front side of the head pipe 22; a pair of left and right front lower covers 52 which is continuously formed on a lower end of the front cover 51; and a handle cover 53 which covers a center portion of the steering handle 27.

The vehicle body cover 50 includes: a front inner cover 54 which covers a rear side of the head pipe 22 and a rear side of the down frame 23; and a leg shield 56 which extends leftward and rightward from the front inner cover 54 and covers a front side of leg portions of a rider.

Further, the vehicle body cover 50 includes: an under cover 58 which covers the left and right lower frames 24 from below; and side covers 59 which cover outer sides of the left and right rear frames 25 in the vehicle width direction. Still further, the vehicle body cover 50 includes: a front fender 61 which covers the front wheel 14 from above; a rear fender 62 which covers the rear wheel 16 from a rear upper side; and an inner rear fender 63 which covers the rear wheel 16 from a front upper side.

A headlight 65 is disposed at the center of a front surface of the handle cover 53, and a wind screen 66 extending rearward and upward as viewed in a side view of the vehicle body is disposed on an upper portion of the front surface of the handle cover 53. A tail lamp 67 is disposed on a rear end of the upper portion of the rear fender 62.

The motorcycle 200 includes: a first storage box 71 which forms a storage portion below the seat 11; and a second storage box 75 which forms a storage portion below the floor step 12.

The first storage box 71 is disposed in a space formed below the seat 11, above the power unit 15 and between the front portions 25a of the left and right rear frames 25. The first storage box 71 is supported by the cross frame 32 extending between the front portions 25a of the left and right rear frames 25 or the like, and is used as a storage portion for storing desired articles to be stored such as a helmet which a rider puts on or a luggage of the rider.

The seat 11 is rotatably mounted on a front end portion of the first storage box 71, and an upper opening of the first storage box 71 can be opened or closed by the seat 11. The seat 11 is an integral body formed of: a front seat 11a for a rider; and a rear seat 11b for a pillion disposed behind the front seat 11a.

The front seat 11a extends above the first storage box 71, and the rear seat 11b extends behind the first storage box 71 and above a fuel tank 77 supported by the rear portions 25b of the left and right rear frames 25. With such a configuration, by opening the seat 11, it is possible to expose the fuel tank 77 jointly with the first storage box 71 to the outside. A pair of left and right rider's steps 78 on which a pillion seated on the rear seat 11b places his feet is mounted on the front portions 25a of the left and right rear frames 25 in a storable manner by way of stays not shown in the drawings. As viewed in a side view of the vehicle body, the rider's steps 78 are disposed at a position corresponding to a rear lower side of the first storage box 71 and a front side of the air cleaner 43.

The second storage box 75 is disposed below the floor step 12 and between the left and right lower frames 24, and forms a storage portion for storing vehicle parts consisting of electrical components such as a battery 80 as articles to be stored.

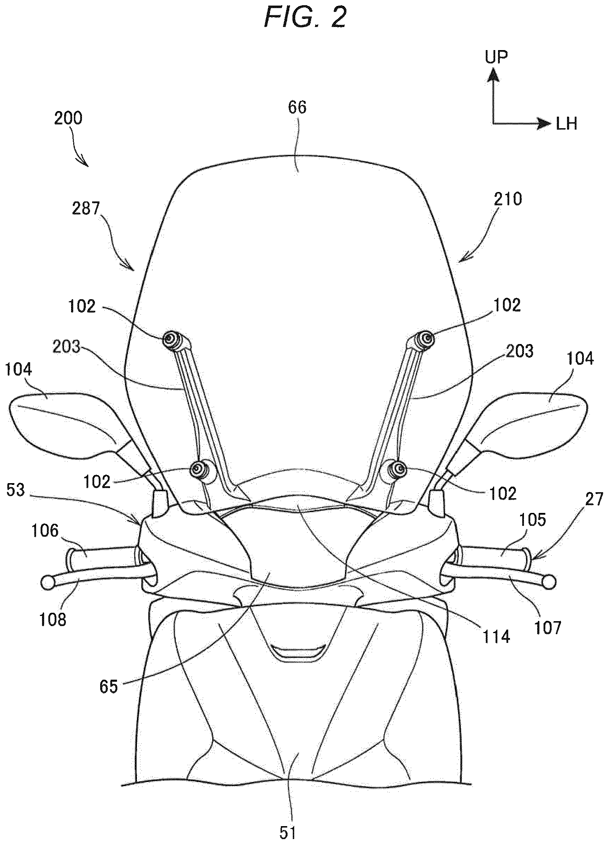

Fig. 2 is a front view showing an upper portion of a front portion of the motorcycle 200.

A large-sized transparent wind screen 66 is disposed above the handle cover 53 of the motorcycle 200. The wind screen 66 has an approximately hexagonal shape where an upper side and a lower side are approximately horizontal and corner portions are formed on left and right sides. The wind screen 66 is mounted by a plurality of bolts 102 on a pair of left and right stay support bodies 203, 203 extending upward in an inverted chevron shape from a center side of the steering handle 27.

The wind screen 66 is curved so as to project frontward and is inclined rearward and hence, heads of the bolts 102 are directed outward in the vehicle width direction with respect to a front side in the longitudinal direction of the vehicle and are directed obliquely upward with respect to the horizontal direction. Symbols 104, 104 are a pair of left and right back mirrors mounted on upper portions of both end portions of the handle cover 53 in the vehicle width direction, symbols 105, 106 are a handle grip and a throttle grip which are mounted on both left and right end portions of the steering handle 27 respectively. Symbol 107 indicates a rear wheel brake lever which is disposed in front of the handle grip 105, and symbol 108 indicates a front wheel brake lever which is disposed in front of the throttle grip 106.

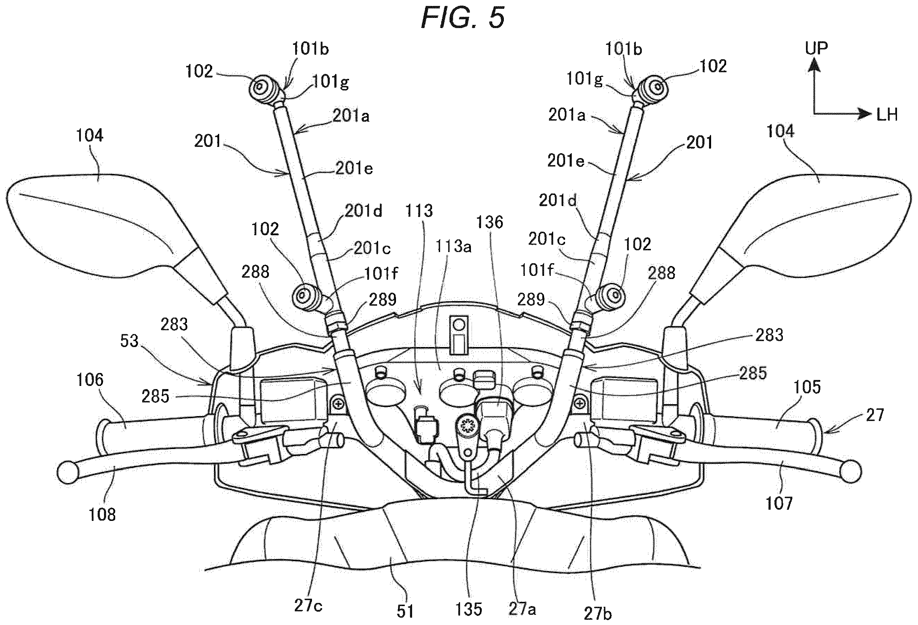

As will be described later in detail, the stay support bodies 203, 203 of this embodiment include the screen stays 201, 201 (see Fig. 5) which are improved such that the screen stays 201, 201 can be easily mounted on or removed from a vehicle body side. A screen assembly 210 (see Fig. 5) formed of the wind screen 66 and the left and right stay support bodies 203, 203 is optionally set. Accordingly, although the screen assembly 210 is not mounted according to the basic specification of the motorcycle 200, the screen assembly 210 can be mounted later by a user. The screen stays 201, 201 described above can be easily mounted on or removed from a vehicle body side as described in detail later and hence, an operation time required for mounting or removing the screen stays 201, 201 (maintenance time) can be shortened and an operation cost can be also suppressed.

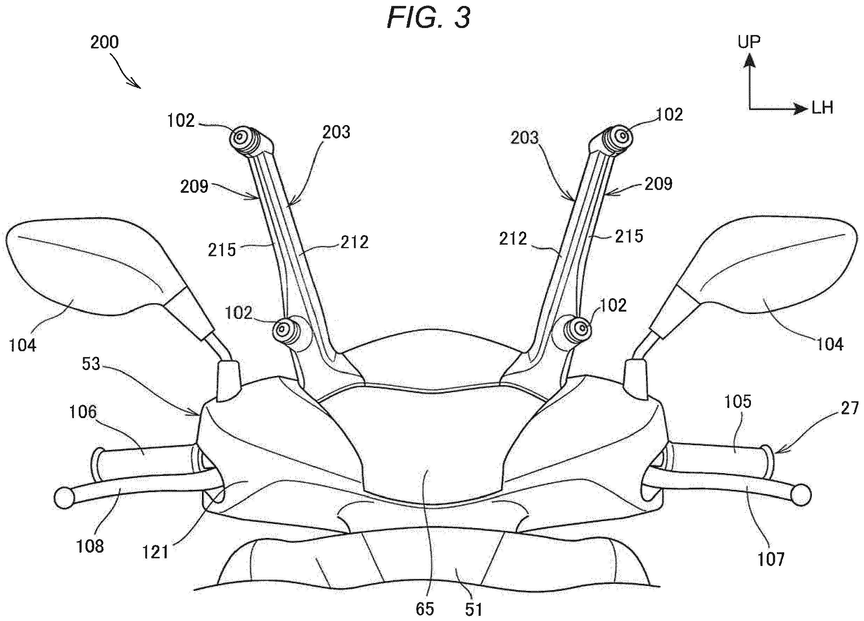

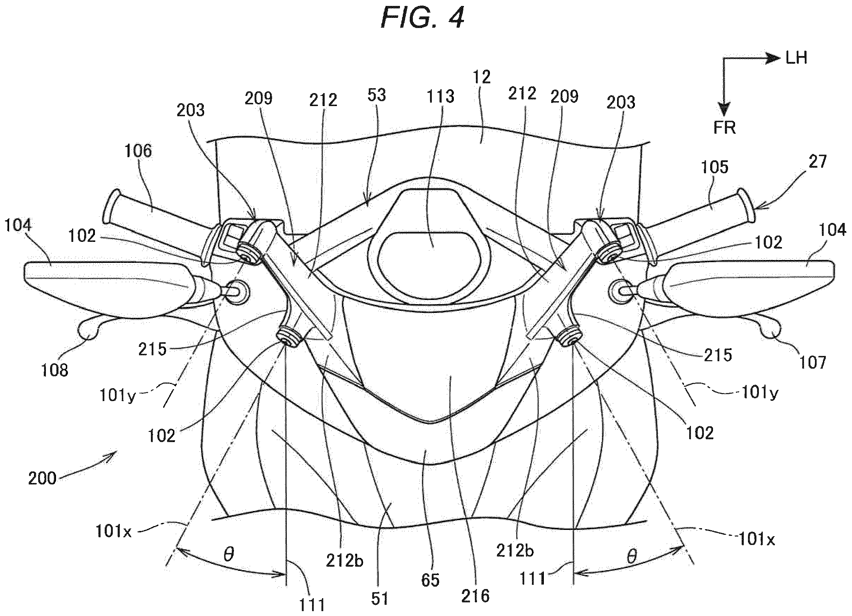

Fig. 3 is a front view showing a state where the wind screen 66 is omitted from the configuration shown in Fig. 2. Fig. 4 is a plan view showing a front portion of the vehicle body of the motorcycle 200 where the wind screen 66 is removed.

In Fig. 2, the wind screen 66 can be removed as shown in Fig. 3 by loosening a plurality of bolts 102.

As shown in Fig. 3 and Fig. 4, the stay support body 203 includes: a screen stay 201 (see Fig. 5) on which the screen 66 (see Fig. 2) is mounted; and a two-split-type stay cover 209 which covers the screen stay 201. A pair of left and right stay covers 209 is provided.

The stay cover 209 is formed of: a first cover 212 which covers the screen stay 201 from a front side and an inner side; and a second cover 215 which covers the screen stay 201 from an outer side and a rear side.

Bolts 102 are threaded into through holes formed in the above-mentioned first covers 212 so that the wind screen 66 is mounted on the screen stays 201.

A meter 113 is disposed at the center of a rear portion of the upper portion of the handle cover 53 in the vehicle width direction, and the handle cover 53 includes a center cover 216 which covers an area above the headlight 65 and in front of the meter 113.

The center cover 216 is a part having a profile where the center cover 216 is curved in a frontwardly projecting manner as viewed in a plan view, and is disposed at the center in the vehicle width direction.

Outside the center cover 216 in the vehicle width direction, lower portions of the left and right stay covers 209 are disposed, and lower portions of the screen stays 201 (see Fig. 5) pass.

According to the basic specification of the motorcycle 200, additional side covers different from the stay covers 209 are mounted on both sides of the center cover 216. Notches or holes which allow the screen stays 201 to pass therethrough are not formed in the additional side covers.

Fig. 5 is a front view showing a state where a front side of the handle cover 53 and the stay covers 209 are omitted from the configuration shown in Fig. 3.

The screen stay 201 includes: a straight pipe-like stay body 201a; and a screen fastening portion 101b which is formed on the stay body 201a for mounting the wind screen 66 (see Fig. 2).

The stay body 201a includes: a large-diameter portion 201c formed on a lower portion of the stay body 201a; a tapered portion 201d having a diameter thereof gradually narrowed upward from an upper end of the large-diameter portion 201c; and a small-diameter portion 201e extending upward from an upper end of the tapered portion 201d. By forming the large-diameter portion 201c, the tapered portion 201d and the small-diameter portion 201e on the stay body 201a in this manner, an aesthetic appearance can be enhanced and, at the same time, due to the formation of the small-diameter portion 201e having the diameter smaller than the diameter of the lower portion of the stay body 201a, a large field of view can be acquired through the wind screen 66 with certainty.

The screen fastening portion 101b is formed of: a lower fastening portion 101f formed on a middle portion of the large-diameter portion 201c of the stay body 201a perpendicular to the large-diameter portion 201c; and an upper fastening portion 101g formed on an upper end portion of the small-diameter portion 201 e of the stay body 201 a perpendicular to the small-diameter portion 201e.

Both the lower fastening portion 101f and the upper fastening portion 101g have a circular columnar shape or a circular cylindrical shape. Both distal end surfaces of the lower fastening portion 101f and the upper fastening portion 101g are respectively directed outward in the vehicle width direction with respect to a front side in the longitudinal direction of the vehicle while being directed obliquely upward with respect to a horizontal direction.

In Fig. 4 and Fig. 5, with respect to the lower fastening portion 101f of the screen stay 201, as viewed in a plan view, an axis 101x of the lower fastening portion 101f is inclined outward in the vehicle width direction with respect to a straight line 111 extending in the longitudinal direction of the vehicle body by an angle θ. That is, the left and right axes 101x, 101x gradually expand toward the outside in the vehicle width direction as the left and right axes 101x, 101x extend toward the front side in the longitudinal direction of the vehicle.

Axes 101y of the upper fastening portions 101g extend parallel to or substantially parallel to the axes 101x of the lower fastening portions 101f, and the left and right axes 101y, 101y gradually expand toward the outside in the vehicle width direction as the left and right axes 101y, 101y extend toward the front side in the longitudinal direction of the vehicle.

In Fig. 5, the steering handle 27 is connected to an upper end of the steering stem 26 (see Fig. 1), and the pair of left and right screen support brackets 283, 283 is fixed to the steering handle 27.

To be more specific, the steering handle 27 includes: a Y-shaped bifurcated portion 27a which extends upward from a connecting portion with the steering stem 26 and is bifurcated obliquely in left and right directions as well as in an upward direction; and a pair of left and right straight portions 27b, 27c which extends in a straight manner from left and right upper ends of the Y-shaped bifurcated portion 27a toward substantially the outside in the vehicle width direction.

Left and right screen support brackets 283, 283 are respectively joined by welding to portions of the steering handle 27 in the vicinity of the left and right upper end portions of the Y-shaped bifurcated portion 27a.

In the left and right screen stays 201, 201, lower end portions of the large-diameter portions 201c are formed into a hollow shape, and upper end portions of the left and right screen support brackets 283, 283 are inserted into the lower end portions of the large-diameter portions 201c, 201c. To be more specific, the lower end portions of the left and right large-diameter portions 201c, 210c are threadedly joined to the upper end portions of the left and right screen support brackets 283, 283.

As viewed in a front view, the left and right screen support brackets 283, 283 are provided such that the left and right screen support brackets 283, 283 are continuously extended to the Y-shaped bifurcated portion 27a of the steering handle 27. Further, the left and right screen stays 201, 201 are provided such that the left and right screen stays 201, 201 are continuously extended to the left and right screen support brackets 283, 283.

The screen support bracket 283 includes: a bracket body 285 fixed to the steering handle 27; a bracket joining member 288 threadedly joined to an upper end portion of the bracket body 285; and a lock nut 289 threadedly joined to an upper portion of the bracket body 285.

The respective bracket joining members 288 of the screen support brackets 283, 283 are covered by stay covers 209 (see Fig. 4) from above so that the screen support brackets 283, 283 are not exposed to the outside.

The left and right screen support brackets 283, 283 and the screen assembly 210 (see Fig. 2) supported by the left and right screen support brackets 283, 283 form a screen device 287 (see Fig. 2).

As described above, the screen support bracket 283 is a cylindrical member having a simple shape where one end of the screen support bracket 283 is joined to the steering handle 27 and the other end of the screen support bracket 283 is inserted into (to be more specific, threadedly joined to) the screen stay 201. Accordingly, a cost of the screen support bracket 283 can be suppressed and assembling of the screen assembly 210 (see Fig. 2) can be performed easily.

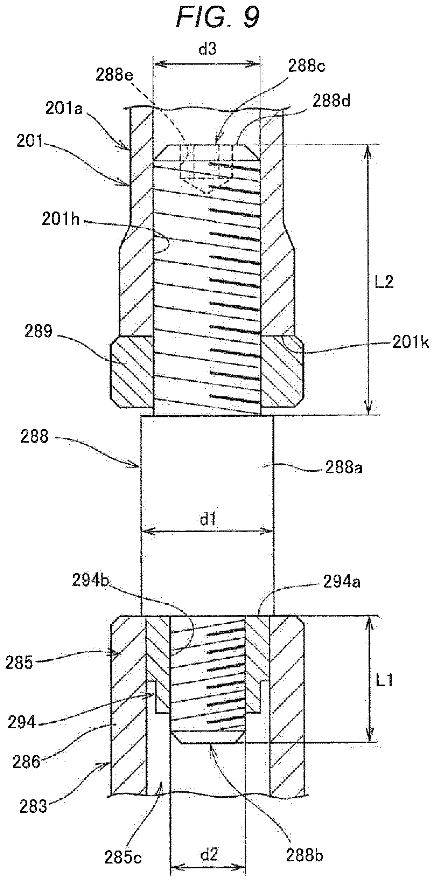

A fixing member (not shown in the drawing) which prevents the rotation of the screen stay 201 about an axis with respect to the screen support bracket 283 is provided to the screen support bracket 283 and the screen stay 201. The fixing member is described in detail with reference to Fig. 9.

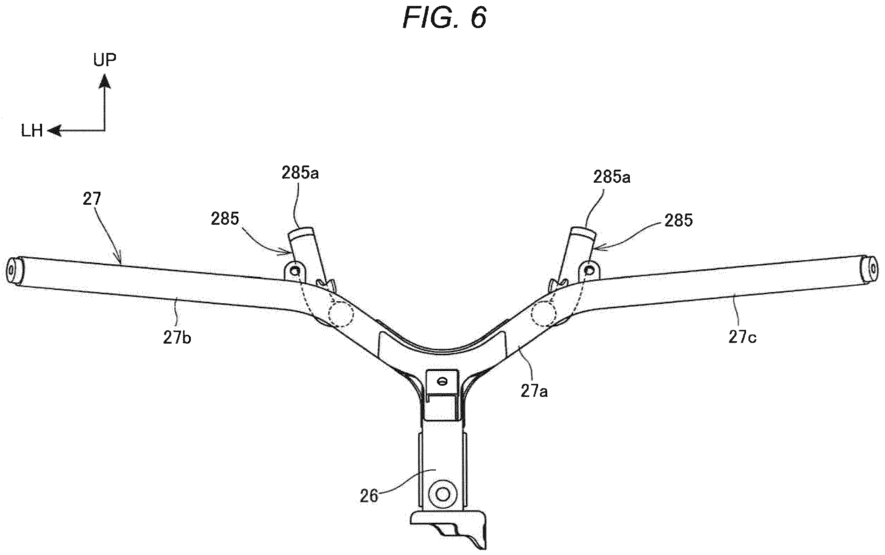

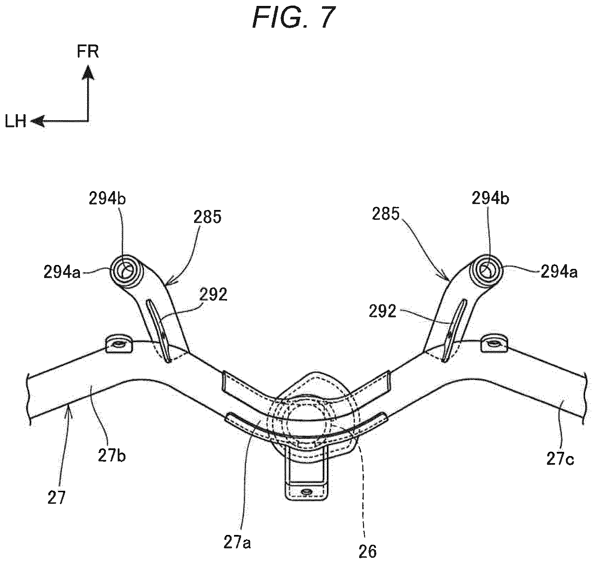

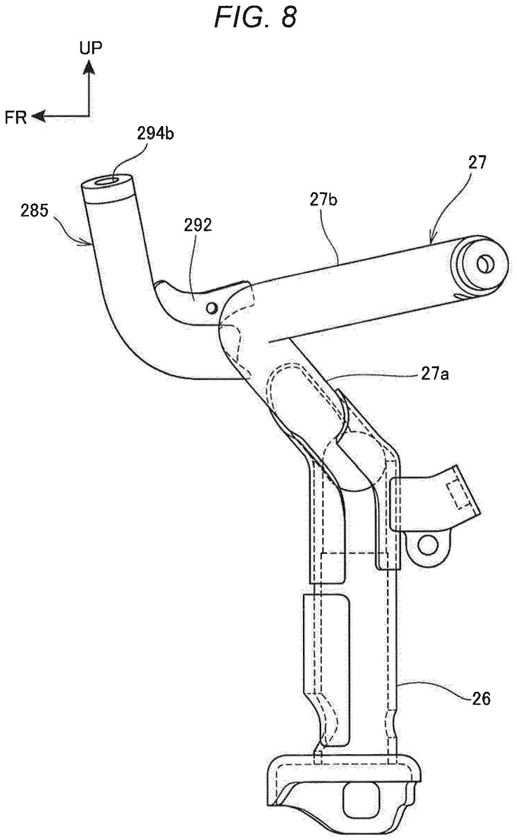

Fig. 6 is a back view showing the steering handle 27 and the left and right bracket bodies 285, 285. Fig. 7 is a plan view showing a center portion of the steering handle 27 and the left and right bracket bodies 285, 285. Fig. 8 is a left side view showing the steering handle 27 and the bracket body 285.

As shown in Fig. 6, the left and right bracket bodies 285, 285 are configured such that lower end portions of the respective bracket bodies 285, 285 are mounted at portions in the vicinity of bent portions formed between the Y-shaped bifurcated portion 27a of the steering handle 27 and straight portions 27b, 27c. As viewed in a back view, the left and right bracket bodies 285, 285 extend obliquely upward and toward the outside from a lower end portion side to an upper end portion side. That is, the left and right bracket bodies 285, 285 extend gradually away from each other in the vehicle width direction as the left and right bracket bodies 285, 285 extend upward.

As shown in Fig. 7, as viewed in a plan view, the left and right bracket bodies 285, 285 extend obliquely frontward and toward the outside from portions in the vicinity of the bent portions formed between the Y-shaped bifurcated portion 27a of the steering handle 27 and straight portions 27b, 27c. A female threaded portion 294b which is a threaded portion where female threads are formed for threaded engagement with the bracket joining member 288 (see Fig. 5) is formed on respective upper end surfaces 294a of the left and right bracket bodies 285, 285.

As shown in Fig. 8, as viewed in a side view, the bracket bodies 285 extend frontward from portions in the vicinity of the bent portions between the Y-shaped bifurcated portion 27a of the steering handle 27 and the straight portions 27b, 27c (see Fig. 6 with respect to the straight portion 27c) and, further, are extended obliquely upward and frontward while being bent.

As shown in Fig. 7 and Fig. 8, a reinforcing plate 292 is welded between a front surface of the steering handle 27 and upper surfaces of root portions of the bracket bodies 285. The bracket bodies 285 are firmly fixed to the steering handle 27 by the reinforcing plates 292. Since the reinforcing plates 292 extend in the vertical direction, a reinforcing effect can be further enhanced.

Fig. 9 is a cross-sectional view showing the joint structure between the screen stay 201 and the screen support bracket 283.

The bracket body 285 is formed of: a pipe-shaped bracket pipe 286 having a hollow portion 285c; and a nut member 294 mounted in the hollow portion 285c formed on an upper end portion of the bracket pipe 286 by fitting. The nut member 294 includes a female threaded portion 294b having an inner peripheral portion on which female threads are formed, is disposed in the inside of the upper end portion of the bracket pipe 286, and is fixed to the bracket pipe 286 by welding or caulking.

The bracket joining member 288 is an integral body formed of: a circular columnar shaft portion 288a; a lower male threaded portion 288b which is a threaded portion formed on a lower end portion of the shaft portion 288a in a downwardly projecting manner; and an upper male threaded portion 288c which is a threaded portion formed on an upper end portion of the shaft portion 288a in an upwardly projecting manner.

The lower male threaded portion 288b on which the male threads are formed is threadedly joined to a female threaded portion 294b formed on the bracket body 285. A lock nut 289 is threadedly joined to the upper male threaded portion 288c which is the threaded portion on which male threads are formed, and the upper male threaded portion 288c is threadedly joined to a female threaded portion 201h formed on a lower end portion of the screen stay 201. In such a state, the lock nut 289 is pressed to a lower end surface 201k of the screen stay 201 by being fastened. As a result, the screen stay 201 is firmly fastened to the bracket joining member 288 so that the loosening of the screen stay 201 relative to the bracket joining member 288 by rotation can be prevented. The lock nut 289 can be used at the time of positioning and fixing the screen fastening portion 101b of the screen stay 201 at a predetermined position in a circumferential direction (see Fig. 5).

A hexagonal hole 288e is formed on an end surface 288d of the upper male threaded portion 288c. By inserting a hexagonal wrench in the hexagonal hole 288e and rotating the upper male threaded portion 288c, the bracket joining member 288 can be easily threaded into the bracket body 285.

The lower male threaded portion 288b and the upper male threaded portion 288c have the opposite thread ridge forming directions. For example, the lower male threaded portion 288b has the clockwise thread ridges, and the upper male threaded portion 288c has the counterclockwise thread ridges. On the other hand, the lower male threaded portion 288b may have the counterclockwise thread ridges, and the upper male threaded portion 288c may have the clockwise thread ridges.

By making the lower male threaded portion 288b and the upper male threaded portion 288c have the opposite thread ridge forming directions, at the time of fixing the screen stay 201 to the bracket joining member 288 by the lock nut 289 in a state where the bracket joining member 288 is fastened to the bracket body 285, the lock nut 289 is rotated in the direction that the lower male threaded portion 288b is fastened so that the lower male threaded portion 288b is not loosened.

Assuming an outer diameter of the shaft portion 288a as d1, a length of the lower male threaded portion 288b in an axial direction as L1, an outer diameter (nominal diameter) of the male threads of the lower male threaded portion 288b as d2, a length of the upper male threaded portion 288c in an axial direction as L2, and an outer diameter (nominal diameter) of the male threads of the upper male threaded portion 288c as d3, the relationship of d1>d3>d2 and the relationship of L1<L2 are established. Such relationship may be changed such that the relationship of d1>d2>d3 and the relationship of L1>L2 are established.

By making the outer diameters d2, d3 of the lower male threaded portion 288b and the upper male threaded portion 288c different from each other or by making the lengths L1, L2 of the lower male threaded portion 288b and the upper male threaded portion 288c different from each other, it is possible to easily distinguish the lower male threaded portion 288b and the upper male threaded portion 288c from each other at the time of assembling the screen support bracket 283. Accordingly, productivity at the time of assembling the screen support bracket 283 can be enhanced.

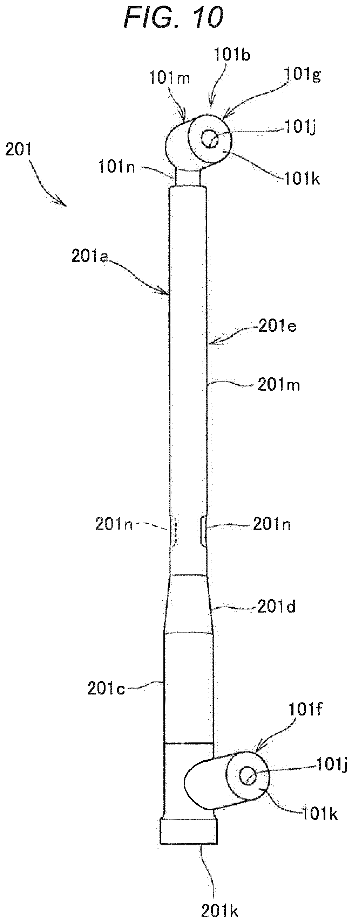

Fig. 10 is a view showing the screen stay 201 as viewed from a side.

A stay body 201a is a pipe-like member having a hollow portion. On an outer peripheral surface 201m of a small-diameter portion 201e of the stay body 201a, flat surfaces 201n, 201n disposed parallel to each other with a predetermined distance therebetween are formed. The pair of flat surfaces 201n, 201n is portions with which a tool such as a wrench is engaged at the time of threadedly joining the screen stay 201 to the bracket joining member 288 (see Fig. 9) by rotating the screen stay 201.

One end of a lower fastening portion 101f is directly fixed to the large-diameter portion 201c. The lower fastening portion 101f may be formed such that the lower fastening portion 101f extends obliquely and upwardly from a horizontal plane with respect to the large-diameter portion 201c when the stay body 201a is raised vertically.

The upper fastening portion 101g is an integral body formed of: a circular columnar or a circular cylindrical body portion 101m; and a circular columnar projecting portion 101n projecting from an outer peripheral surface of the body portion 101m. The body portion 101m of the upper fastening portion 101g may be formed such that the body portion 101m extends obliquely and upwardly from a horizontal plane with respect to the small-diameter portion 201e when the stay body 201a is raised vertically. The projecting portion 101n is inserted into and fixed to a hollow portion which opens on an upper end portion of the stay body 201a. A threaded hole 101j into which a bolt 102 (see Fig. 2) is threaded is formed on a distal end surface 101k of the lower fastening portion 101f and on a distal end surface 101k of the body portion 101m of the upper fastening portion 101g.

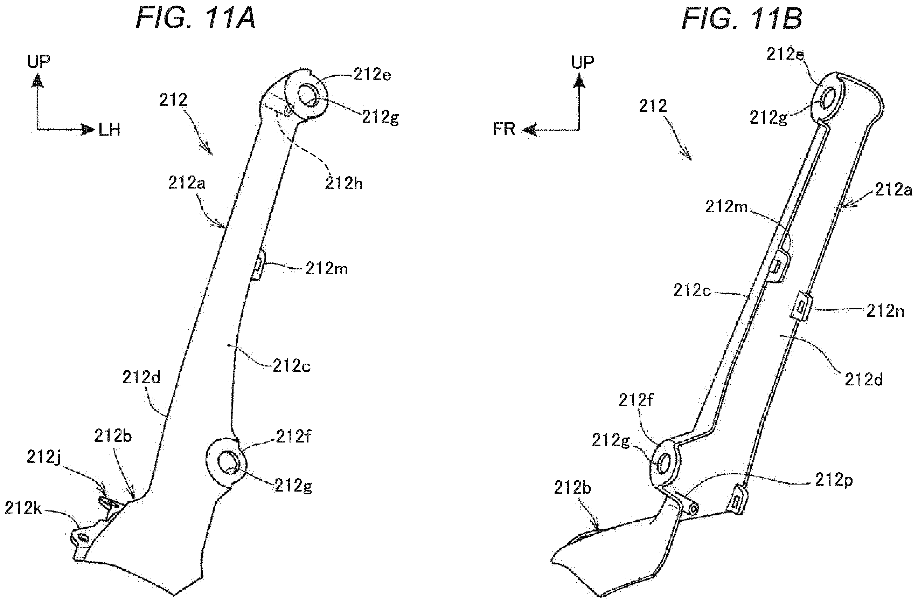

Fig. 11A and Fig. 11B are views showing a first cover 212 which forms a stay cover 209, wherein Fig. 11A is a front view of the first cover 212, and Fig. 11B is a left side view of the first cover 212.

As shown in Fig. 11A and Fig. 11B, the first cover 212 is formed of: an upper cover portion 212a; and a lower cover portion 212b integrally formed with a lower portion of the upper cover portion 212a.

The upper cover portion 212a includes: a front wall portion 212c positioned on a front side; and an inner wall portion 212d extending rearward from an inner edge portion of the front wall portion 212c and integrally with the inner edge portion. Flat portions 212e, 212f which are directed toward an approximately front side are formed on an upper end portion and a lower end portion of the front wall portion 212c respectively, and a bolt insertion hole 212g into which a bolt 102 (see Fig. 2) for fixing the wind screen 66 (see Fig. 2) is inserted is formed in the flat portions 212e, 212f.

The flat portions 212e, 212f project toward more frontward than an intermediate portion of the front wall portion 212c in a vertical direction. The flat portions 212e, 212f are disposed in front of the lower fastening portion 101f (see Fig. 5) and the upper fastening portion 101g (see Fig. 5) of the screen stay 201 (see Fig. 5).

In Fig. 11A, a screw threading portion 212h into which a screw is threaded is formed in a portion of the upper cover portion 212a in the vicinity of the flat portion 212e on an upper side. Further, a plurality of screw fastening portions 212j, 212k for fastening the lower cover portion 212b to an inner side of the handle cover 53 (see Fig. 3) by screws are formed on the lower cover portion 212b.

In Fig. 11B, at a middle portion of the upper cover portion 212a in a vertical direction, a hook engaging portion 212m is formed on the front wall portion 212c, and a hook engaging portion 212n is formed on the inner wall portion 212d.

Further, a screw threading portion 212p into which a screw is threaded is formed on a lower end portion of the upper cover portion 212a. The lower cover portion 212b extends obliquely frontward and downward from a lower portion of the upper cover portion 212a.

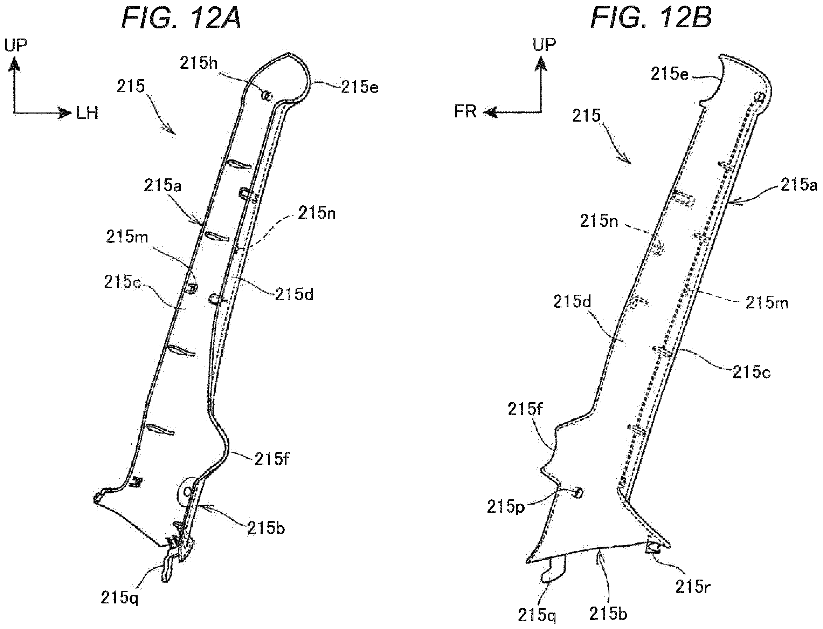

Fig. 12A and Fig. 12B are views showing a second cover 215 which forms the stay cover 209. Fig. 12A is a front view of the second cover 215, and Fig. 12B is a left side view of the second cover 215.

As shown in Fig. 12A and Fig. 12B, the second cover 215 is formed of: an upper cover portion 215a; and a lower cover portion 215b integrally formed with a lower portion of the upper cover portion 215a.

The upper cover portion 215a includes: a rear wall portion 215c positioned on a rear side; and an outer wall portion 215d extending frontward integrally from an outer edge portion of the rear wall portion 215c. Bulging portions 215e, 215f which bulge toward the outside are formed on an upper end portion and a lower end portion of the outer wall portion 215d.

In Fig. 12A, a screw insertion hole 215h which allows a screw to pass therethrough is formed in a portion of the upper cover portion 212a in the vicinity of the bulging portion 215e on an upper side.

In Fig. 12B, at a middle portion of the upper cover portion 215a in a vertical direction, a hook portion 215m is formed on the rear wall portion 215c, and a hook portion 215n is formed on the outer wall portion 215d. Further, a screw insertion hole 215p which allows a screw to pass therethrough is formed on a lower end portion of the upper cover portion 215a.

The lower cover portion 215b is formed such that a width of the lower cover portion 215b is increased gradually in the longitudinal direction as the lower cover portion 215b extends downward from a lower portion of the upper cover portion 215a. On a lower end portion of the lower cover portion 215b, a lower front hook portion 215q positioned on a front side and a lower rear hook portion 215r positioned on a rear side are formed.

In Fig. 11A and Fig. 12A, the first cover 212 and the second cover 215 are made to overlap with each other in the vehicle width direction and are joined to each other.

In a state where the first cover 212 and the second cover 215 are made to overlap with each other, the bulging portion 215e of the second cover 215 is made to overlap with an edge of the flat portion 212e of the first cover 212, and the bulging portion 215f of the second cover 215 is made to overlap with an edge of the flat portion 212f of the first cover 212.

In Fig. 11B and Fig. 12B, the hook portions 215m, 215n of the second cover 215 are engaged with the hook engaging portions 212m, 212n of the first cover 212.

In Fig. 11A and Fig. 12A, the screw is made to pass through the screw insertion hole 215h formed in the second cover 215, and is threaded into the screw threading portion 212h of the first cover 212. Further, in Fig. 11B and Fig. 12B, the screw is made to pass through the screw insertion hole 215p formed in the second cover 215, and is threaded into the screw threading portion 212p of the first cover 212.

Then, in Fig. 12B, the lower front hook portion 215q and the lower rear hook portion 215r of the second cover 215 are engaged with an inner side of the handle cover 53. Further, in Fig. 11A, the screw fastening portions 212j, 212k are fastened to the inside of the handle cover 53 by screws.

As shown in Fig. 9 referenced above, the screen support brackets 283 which form the left and right brackets and the screen stays 201 which form the stays respectively include the upper male threaded portions 288c and the female threaded portions 201h which form the threaded portions and are respectively engaged with each other, and one of the screen support brackets 283 and the screen stays 201 is threadedly joined to and is inserted into the other of the screen support brackets 283 and the screen stays 201.

With such a configuration, it is possible to prevent the removal of the screen stays 201 from the screen support brackets 283. Further, the screen stays 201 can be firmly joined to the left and right screen support brackets 283 by threaded joining.

Either one of the left and right screen support brackets 283 and the screen stays 201 includes the lock nut 289 which forms a fixing member for preventing loosening of the threaded joining between the left and right screen support brackets 283 and the screen stays 201. Accordingly, the screen stays 201 can be more firmly fixed to the left and right screen support brackets 283 by the lock nut 289.

Further, by providing the bracket joining member 288 as a part separate from the bracket body 285, the screen stay 201 can be changed to another specification by merely changing the bracket joining member 288 to another specification. Therefore, the wind screen 66 (see Fig. 2) can be easily exchanged with another desired wind screen. Accordingly, the degree of freedom in selecting the wind screen 66 can be increased.

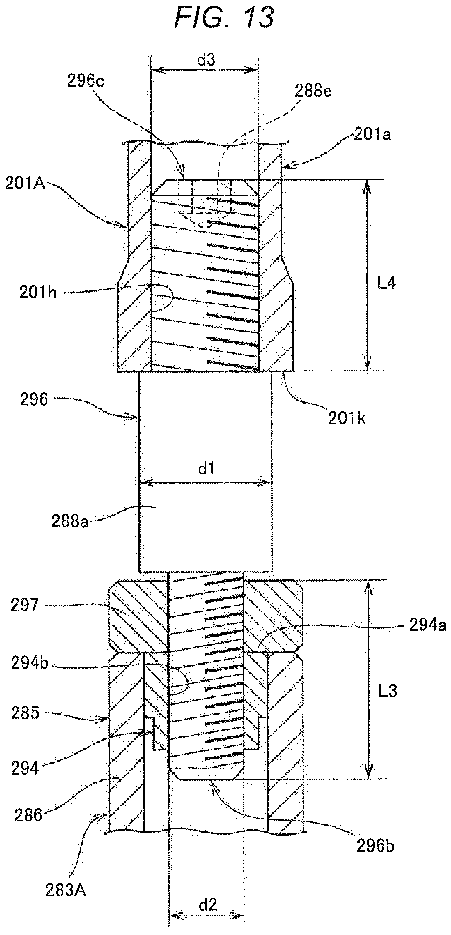

Fig. 13 is a cross-sectional view showing the joint structure between the screen stays 201A and a screen support bracket 283A (another embodiment shown in Fig. 9). With respect to another embodiment, constitutional parts equal to the constitutional parts of the first embodiment shown in Fig. 9 are given same symbols, and the detailed explanation of constitutional parts of another embodiment is omitted.

The lower end portion of the screen stay 201A is inserted into the upper end portion of the screen support bracket 283A. To be more specific, the lower end portion of the screen stay 201A is fixed to the upper end portion of the screen support bracket 283A by threaded joining.

The screen stay 201A includes: the stay body 201a; the screen fastening portion 101b (see Fig. 5); the bracket joining member 296 threadedly joined to the lower end portion of the stay body 201a; and the lock nut 297 threadedly joined to the lower end portion of the bracket joining member 296.

The bracket joining member 296 is an integral body formed of: a circular columnar shaft portion 288a; a lower male threaded portion 296b which is a threaded portion formed on a lower end portion of the shaft portion 288a in a downwardly projecting manner; and an upper male threaded portion 296c which is a threaded portion formed on an upper end portion of the shaft portion 288a in an upwardly projecting manner. The lock nut 297 is threadedly joined to the lower male threaded portion 296b of the bracket joining member 296.

The screen support bracket 283A is formed of the bracket body 285.

The lower male threaded portion 296b on which the male threads are formed and to which the lock nut 297 is threadedly joined is threadedly joined to the female threaded portion 294b of the bracket body 285. The upper male threaded portion 296c on which the male threads are formed is threadedly joined to the female threaded portion 201h which is a threaded portion of the stay body 201a in which the female threads are formed. In such a state, the lock nut 297 is pressed to an upper end surface 294a of the bracket body 285 by being fastened. As a result, the bracket joining member 296 is firmly fastened to the bracket body 285 so that the loosening of the bracket joining member 296 relative to the bracket body 285 by rotation can be prevented. The lock nut 297 can be used at the time of positioning and fixing the screen fastening portion 101b of the screen stay 201A at a predetermined position in a circumferential direction (see Fig. 5).

The lower male threaded portion 296b and the upper male threaded portion 296c have the opposite thread ridge cutting directions. For example, the lower male threaded portion 296b has the clockwise thread ridges, and the upper male threaded portion 296c has the counterclockwise thread ridges. On the other hand, the lower male threaded portion 296b may have the counterclockwise thread ridges, and the upper male threaded portion 296c may have the clockwise thread ridges.

Assuming a length of the lower male threaded portion 296b in an axial direction as L3, an outer diameter (nominal diameter) of the male threads of the lower male threaded portion 296b as d2, a length of the upper male threaded portion 296c in an axial direction as L4, and an outer diameter (nominal diameter) of the male threads of the upper male threaded portion 296c as d3, the relationship of L3>L4 is established. The relationship may be changed such that the relationship of L3<L4 is established.

### <Second embodiment>

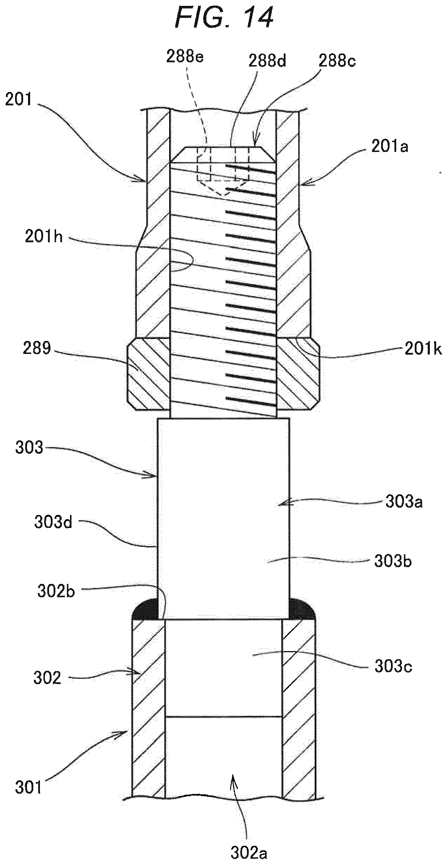

Fig. 14 is a cross-sectional view showing the joint structure between a screen stay 201 and a screen support bracket 301 according to a second embodiment. With respect to the second embodiment, constitutional parts equal to the constitutional parts of the first embodiment shown in Fig. 9 are given the same symbols, and the detailed explanation of constitutional parts of the second embodiment is omitted.

The pair of left and right screen support brackets 301 is mounted on a steering handle 27 (see Fig. 1). A screen stay 201 is mounted on an upper end portion of the screen support bracket 301.

The screen support bracket 301 includes: a bracket body 302 fixed to the steering handle 27; a bracket joining member 303 mounted on an upper end portion of the bracket body 302 by welding; and a lock nut 289 threadedly joined to an upper portion of the bracket joining member 303.

The bracket body 302 is a pipe-like member having a hollow portion 302a. The bracket joining member 303 is an integral body formed of: a shaft portion 303a; and an upper male threaded portion 288c extending upward from an upper end portion of the shaft portion 303a.

The shaft portion 303a is an integral body formed of: a large-diameter portion 303b; and a small-diameter portion 303c projecting upward from a lower end portion of the large-diameter portion 303b. The small-diameter portion 303c is inserted into a hollow portion 302a formed on an upper end portion of the bracket body 302, and an upper end surface 302b of the bracket body 302 and an outer peripheral surface 303d of the large-diameter portion 303b are welded to each other. The lock nut 289 is threadedly joined to the upper male threaded portion 288c.

### <Third embodiment>

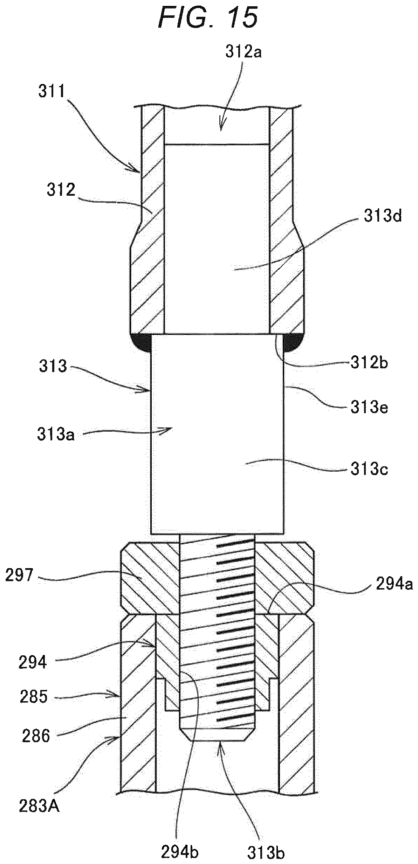

Fig. 15 is a cross-sectional view showing the joint structure between a screen stay 311 and a screen support bracket 283A according to a third embodiment. With respect to the third embodiment, constitutional parts equal to the constitutional parts of the first embodiment shown in Fig. 9 and another embodiment shown in Fig. 13 are given the same symbols, and the detailed explanation of constitutional parts of the third embodiment is omitted.

A screen stay 311 is mounted on an upper end portion of the screen support bracket 283A.

The screen stay 311 includes: a stay body 312; a screen fastening portion 101b (see Fig. 5); a bracket joining member 313; and a lock nut 297.

The stay body 312 is a straight pipe-like member having a hollow portion 312a. The screen fastening portion 101b is mounted on the stay body 312 for mounting a wind screen 66 (see Fig. 2). The bracket joining member 313 includes: a shaft portion 313a inserted into the hollow portion 312a formed on a lower end portion of the stay body 312 and mounted on a lower end portion of the stay body 312 by welding; and a male threaded portion 313b which is a threaded portion extending downward integrally from a lower end of the shaft portion 313a.

The shaft portion 313a is formed of: a large-diameter portion 313c; and a small-diameter portion 313d integrally formed with an upper end portion of the large-diameter portion 313c. The small-diameter portion 313d is inserted into the hollow portion 312a of the stay body 312, and a lower end surface 312b of the stay body 312 and an outer peripheral surface 313e of the large-diameter portion 313c are welded to each other. The male threaded portion 313b is a portion on which male threads are formed. A lock nut 297 is threadedly joined to the male threaded portion 313b, and the male threaded portion 313b is threadedly joined to a female threaded portion 294b of the screen support bracket 283A. The lock nut 297 is fastened such that the lock nut 297 presses an upper end surface 294a of the bracket body 285. With such a configuration, the bracket joining member 313 and, eventually, the screen stay 311 can be firmly fixed to the screen support bracket 283A.

The screen support bracket 283 shown in Fig. 9, the screen support bracket 283A shown in Fig. 13, and the screen support bracket 301 shown in Fig. 14 which have been described heretofore are disposed in the inside of a handle cover 53 (see Fig. 3 and Fig. 5) which is mounted on a steering handle 27 (see Fig. 5) and covers the steering handle 27. With such a configuration, the external appearance can be enhanced.

### <Fourth embodiment>

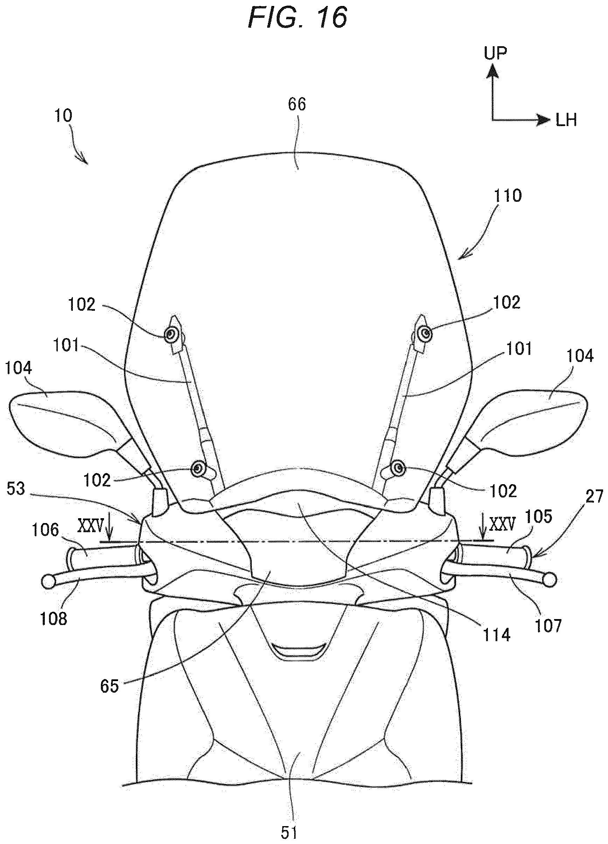

Fig. 16 is a front view showing an upper portion of a front portion of a motorcycle 10 provided with a screen stay 101 according to a fourth embodiment. The fourth embodiment is described by giving the same symbols to constitutional parts equal to the constitutional parts of the first embodiment.

The motorcycle 10 differs from the motorcycle 200 (see Fig. 1) with respect to the screen stay 101 and the constitution relating to the screen stay 101. The motorcycle 10 is equal to the motorcycle 200 with respect to constitutions other than the screen stay 101 and the constitution relating to the screen stay 101.

A large-sized transparent wind screen 66 is disposed above a handle cover 53 of the motorcycle 10. The wind screen 66 is mounted by a plurality of bolts 102 on the pair of left and right screen stays 101, 101 extending upward in an inverted chevron shape from a center side of a steering handle 27.

The wind screen 66 is curved so as to project frontward and is inclined rearward and hence, heads of the bolts 102 are directed outward in the vehicle width direction with respect to a front side in the longitudinal direction of the vehicle and are directed obliquely upward with respect to the horizontal direction.

With respect to the screen stays 101, 101 of this embodiment, as described in detail later, the improvement lies in that the screen stays 101, 101 can be easily mounted on or removed from a vehicle body side. That is, a screen assembly 110 formed of the wind screen 66 and the left and right screen stays 101, 101 is optionally set. Accordingly, although the screen assembly 110 is not mounted according to the basic specification of the motorcycle 10, the screen assembly 110 can be mounted later by a user. As described above, the screen stays 101, 101 can be easily mounted on or removed from a vehicle body side and hence, an operation time (maintenance time) required for mounting or removing the screen stays 101, 101 can be shortened and an operation cost can be also suppressed.

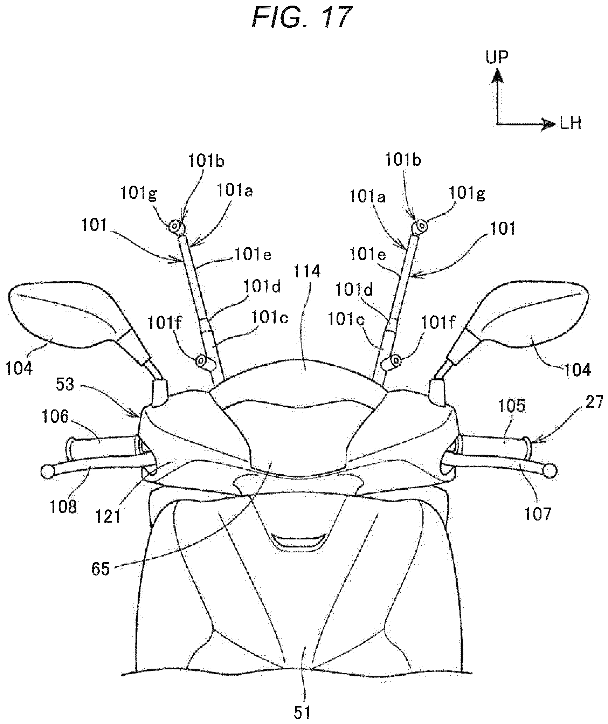

Fig. 17 is a front view showing a state where the wind screen 66 is omitted from the configuration shown in Fig. 16.

The wind screen 66 shown in Fig. 16 can be removed as shown in Fig. 17 by loosening a plurality of bolts 102.

The screen stay 101 includes: a straight rod-like stay body 101a; and a screen fastening portion 101b which is formed on the stay body 101a for mounting the wind screen 66 (see Fig. 2).

The stay body 101a includes: a large-diameter portion 101c formed on a lower portion of the stay body 101a; a tapered portion 101d having a diameter thereof gradually narrowed upward from an upper end of the large-diameter portion 101c; and a small-diameter portion 101e extending upward from an upper end of the tapered portion 101d. By forming the large-diameter portion 101c, the tapered portion 101d and the small-diameter portion 101e on the stay body 101a, an aesthetic appearance can be enhanced and, at the same time, due to the formation of the small-diameter portion 101e having the diameter smaller than the diameter of the lower portion of the stay body 101a, a large field of view through the wind screen 66 can be acquired with certainty.

The screen fastening portion 101b is formed of: a lower fastening portion 101f formed on a middle portion of the large-diameter portion 101c of the stay body 101a perpendicular to the large-diameter portion 101c; and an upper fastening portion 101g formed on an upper end portion of the small-diameter portion 101e of the stay body 101a perpendicular to the small-diameter portion 101e.

Both the lower fastening portion 101f and the upper fastening portion 101g have a circular columnar shape or a circular cylindrical shape. Both distal end surfaces of the lower fastening portion 101f and the upper fastening portion 101g are respectively directed outward in the vehicle width direction with respect to a front side in the longitudinal direction of the vehicle while being directed obliquely upward with respect to a horizontal direction.

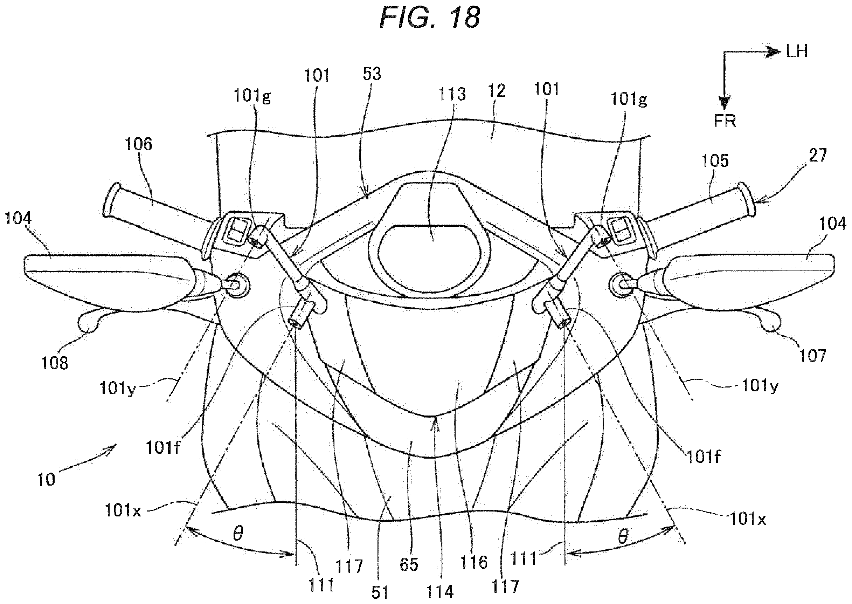

Fig. 18 is a plan view showing a front portion of the vehicle body of the motorcycle 10.

As viewed in a plan view, with respect to the lower fastening portions 101f of the screen stays 101, axes 101x of the lower fastening portions 101f are inclined outward in the vehicle width direction with respect to a straight line 111 extending in the longitudinal direction of the vehicle body at an angle θ. That is, the left and right axes 101x, 101x gradually expand toward the outside in the vehicle width direction as the left and right axes 101x, 101x extend toward the front side in the longitudinal direction of the vehicle.

Axes 101y of the upper fastening portions 101g extend parallel to or substantially parallel to the axes 101x of the lower fastening portions 101f, and the left and right axes 101y, 101y gradually expand toward the outside in the vehicle width direction as the left and right axes 101y, 101y extend toward the front side in the longitudinal direction of the vehicle.

The handle cover 53 includes an upper cover 114 which covers an area above a headlight 65 and in front of a meter 113.

The upper cover 114 is a part having a profile which is curved in a frontwardly projecting manner as viewed in a plan view. The upper cover 114 is formed of: a center cover 116 disposed at the center of the upper cover 114; and detachable side covers 117, 117 disposed on both sides of the center cover 116.

A notch or a hole (not shown in the drawing) which allows the screen stay 101 to pass therethrough is formed on an outer end portion of each of the side covers 117 in the vehicle width direction. The screen stay 101 extends toward an upper side of the side cover 117 from an inner side of the side cover 117 through the notch or the hole.

In the basic specification of the motorcycle 10, side covers which differ from the side covers 117 are mounted on the motorcycle 10. The notches or the holes which are formed in the side covers 117 are not formed in the different side covers. That is, the left and right side covers 117, 117 are parts which are optionally mounted, and are used as dedicated parts for the screen assembly 110.

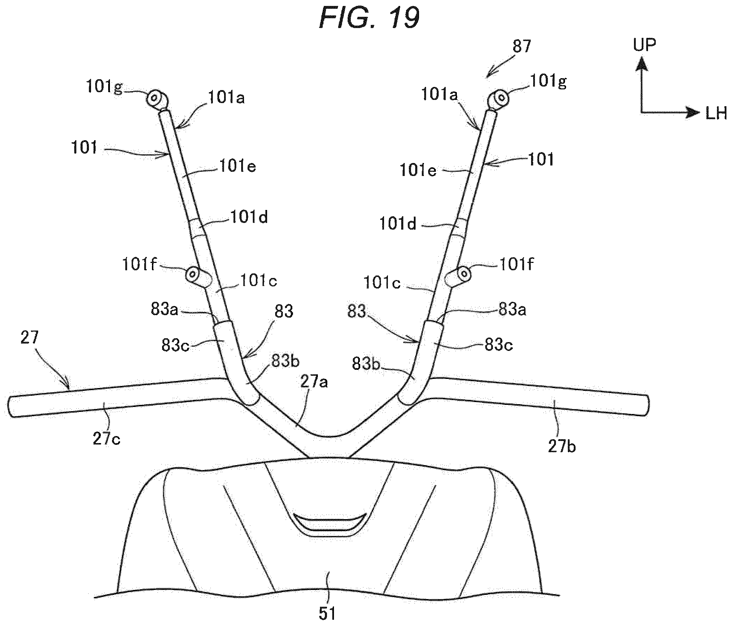

Fig. 19 is a front view showing a state where the handle cover 53 and parts around the handle cover 53 are removed from the configuration shown in Fig. 17.

A pair of left and right screen support brackets 83, 83 is fixed to the steering handle 27. The left and right screen support brackets 83, 83 are respectively joined by welding to areas in the vicinity of left and right upper end portions of the Y-shaped bifurcated portion 27a of the steering handle 27.

With respect to the left and right screen stays 101, 101, lower end portions of large-diameter portions 101c of the screen stays 101, 101 are inserted into hollow portions of the left and right screen support brackets 83, 83 formed into a cylindrical shape from above.

As viewed in a front view, the left and right screen support brackets 83, 83 are mounted such that the left and right screen support brackets 83, 83 continuously extend to the Y-shaped bifurcated portion 27a of the steering handle 27. Further, the left and right screen stays 101, 101 are mounted such that the left and right screen stays 101, 101 continuously extend to the left and right screen support brackets 83, 83.

End surfaces 83a formed on respective upper ends of the screen support brackets 83, 83 are covered by the side covers 117 (see Fig. 18) of the handle cover 53 (see Fig. 16) from above so that the screen support brackets 83, 83 are not exposed to the outside.

The left and right screen support brackets 83, 83 and the screen assembly 110 (see Fig. 16) supported by the left and right screen support brackets 83, 83 form a screen device 87.

As described above, the screen support bracket 83 is a cylindrical member having a simple shape where one end of the screen support bracket 83 is joined to the steering handle 27 and the screen stay 101 is inserted into the screen support bracket 83 from the other end of the screen support bracket 83. Accordingly, a cost of the screen support bracket 83 can be suppressed and assembling of the screen assembly 110 (see Fig. 16) can be performed easily.

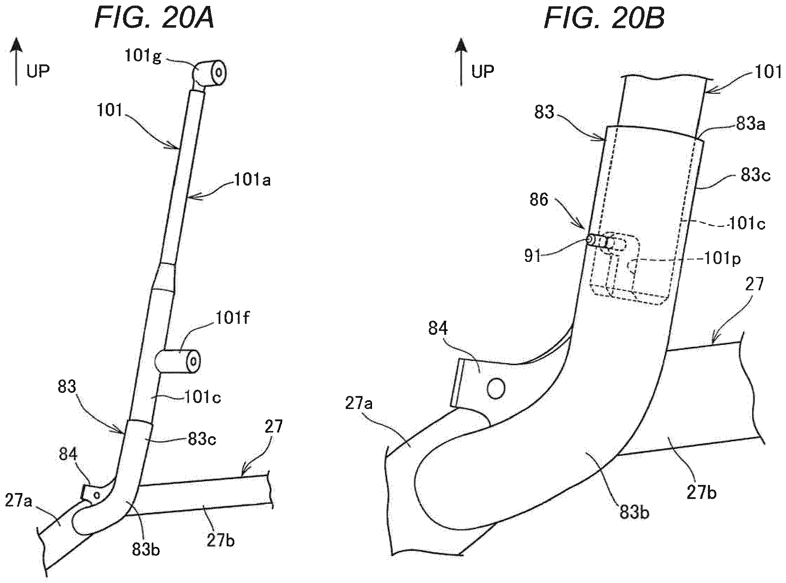

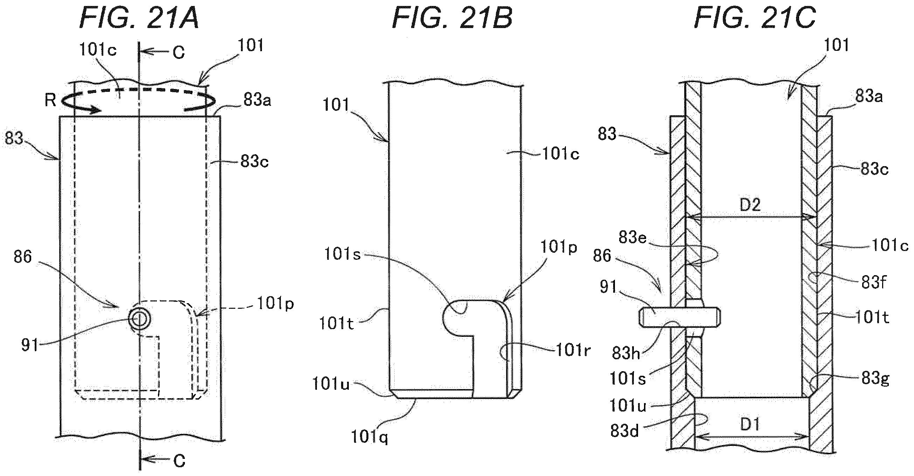

A locking mechanism (not shown in the drawing) which prevents the rotation of the screen stay 101 about an axis with respect to the screen support bracket 83 and prevents the screen stay 101 from being removed from the screen support bracket 83 is provided to the screen support bracket 83 and the screen stay 101. This locking mechanism is described in detail with reference to Fig. 20 and Fig. 21.

Fig. 20A and Fig. 20B are explanatory views showing a joined state between the screen support bracket 83 mounted on a left side of the steering handle 27 and the screen stay 101. Fig. 20A is the view of the screen support bracket 83 and the screen stay 101 as viewed from a right oblique front side of the vehicle, and Fig. 20B is an enlarged view of a main part of the configuration shown in Fig. 20A.

As shown in Fig. 20A, the screen support bracket 83 is a cylindrical member where a curved portion 83b which extends forward and upward from a front portion of the Y-shaped bifurcated portion 27a of the steering handle 27 in a curved manner, and a straight portion 83c which extends in a straight manner upward from an upper end of the curved portion 83b are integrally formed with each other.

The steering handle 27 is joined to the lower end portion of the curved portion 83b, and the lower end portion of the screen stay 101 is inserted into the straight portion 83c.

As shown in Fig. 20B, the screen support bracket 83 is supported by a reinforcing plate 84 welded to the steering handle 27. One end of the reinforcing plate 84 is joined to the Y-shaped bifurcated portion 27a of the steering handle 27 by welding, and the other end of the reinforcing plate 84 is joined to an outer peripheral surface of the curved portion 83b of the screen support bracket 83. The screen support bracket 83 is reinforced by this reinforcing plate 84.

The locking mechanism 86 which stops the rotation of the screen stay 101 and the removal of the screen stay 101 is provided to the screen support bracket 83 and the screen stay 101.

The locking mechanism 86 is formed of: a locking pin 91 which is mounted on the straight portion 83c of the screen support bracket 83; and a locking notch 101p which is formed on an outer peripheral surface of the lower end portion of the large-diameter portion 101c of the screen stay 101 and is engageable with the locking pin 91.

The locking pin 91 is configured to slightly project from a surface of the straight portion 83c of the screen support bracket 83 on an inner side in the vehicle width direction and to extend approximately in the vehicle width direction. By providing the locking pin 91 on the inner side of the screen support bracket 83 in the vehicle width direction in this manner, the locking pin 91 is visually recognized only minimally and hence, the external appearance can be enhanced.

Fig. 21A to Fig. 21C are explanatory views for explaining the locking mechanism 86. Fig. 21A is a front view showing the locking mechanism 86, and Fig. 21B is a front view showing the locking notch 101p of the screen stay 101, and Fig. 21C is a cross-sectional view taken along a line C-C in Fig. 21A.

Fig. 21A shows a state where the large-diameter portion 101c of the screen stay 101 is inserted into the straight portion 83c of the screen support bracket 83 having a cylindrical shape.

The locking pin 91 is fixed to the straight portion 83c of the screen support bracket 83 such that the locking pin 91 is disposed orthogonal to the longitudinal direction of the straight portion 83c and penetrates the straight portion 83c in the direction perpendicular to a surface of a paper on which Fig. 21A is described.

The locking notch 101p having an L shape as viewed in a front view is formed on a lower end portion of the large-diameter portion 101c of the screen stay 101. Fig. 21A shows a state where the locking pin 91 and the locking notch 101p engage with each other. In this state, the removal of the screen stay 101 from the screen support bracket 83 is prevented, and the rotation of the screen stay 101 in one direction about the axis (the rotation in an R direction indicated by an arrow in the drawing) is restricted.

The above-mentioned R direction agrees with, for example, the rotation direction that respective end surfaces of the lower fastening portion 101f and the upper fastening portion 101g of the screen stay 101 shown in Fig. 18 rotate so as to change the direction thereof from a front side to the outside in the vehicle width direction. The locking state of the locking mechanism 86 shown in Fig. 21A is a state where the lower fastening portion 101f and the upper fastening portion 101g shown in Fig. 18 are directed outward in the vehicle width direction with respect to the front side by an angle θ.

As shown in Fig. 21B, in the screen stay 101, the locking notch 101p is formed on a lower end portion of the large-diameter portion 101c. The locking notch 101p is formed of: a longitudinal slit 101r which extends from an end surface 101q of the large-diameter portion 101c along the longitudinal direction of the large-diameter portion 101c; and a lateral slit 101s which extends from an upper end of the longitudinal slit 101r in a circumferential direction and communicates with the longitudinal slit 101r.

A distal end portion of the lateral slit 101s is formed into a projecting arcuate shape. The longitudinal slit 101r and the lateral slit 101s have the same width, and this width is set larger than an outer diameter of the locking pin 91 (see Fig. 21A).

A chamfer 101u is formed on a corner portion between an outer peripheral surface 101t and the end surface 101q of the large-diameter portion 101c.

As shown in Fig. 21C, a hollow portion 83d having an inner diameter D1 is formed in the whole screen support bracket 83. In the hollow portion 83d of the straight portion 83c, a large-diameter hole 83e having an inner diameter D2 larger than the inner diameter D1 is formed in an upper end portion of the hollow portion 83d. The large-diameter portion 101c of the screen stay 101 is inserted into the large-diameter hole 83e.

The large-diameter hole 83e is formed of: a straight hole 83f extending in a straight manner in the longitudinal direction; and a female tapered portion 83g extending from a lower end of the straight hole 83f such that the female tapered portion 83g is tapered downward.

The outer peripheral surface 101t of the screen stay 101 is fitted into the straight hole 83f by loose fitting, and the chamfer 101u of the screen stay 101 is closely fitted on the female tapered portion 83g. In this manner, the female tapered portion 83g and the chamfer 101u form the stopper structure which restricts an insertion height of the screen stay 101.

A through hole 83h which communicates with the inside of the large-diameter hole 83e is formed in the straight portion 83c of the screen support bracket 83, and the locking pin 91 is pushed into the through hole 83h such that the locking pin 91 projects into the large-diameter hole 83e, and is engageable with the locking notch 101p formed on the screen stay 101.

In Fig. 21A and Fig. 21B, in a state where the locking notch 101p engages with the locking pin 91, an edge of the lateral slit 101s is brought into contact with the locking pin 91 and hence, the large-diameter portion 101c cannot be pulled out from the straight portion 83c. Accordingly, when the screen stay 101 is rotated in the direction opposite to the R direction, the edge of the longitudinal slit 101r formed on the screen stay 101 is brought into contact with the outer peripheral surface of the locking pin 91. In this state, the large-diameter portion 101c can be pulled out from the straight portion 83c.

The manner of assembling the screen assembly 110 described above is described.

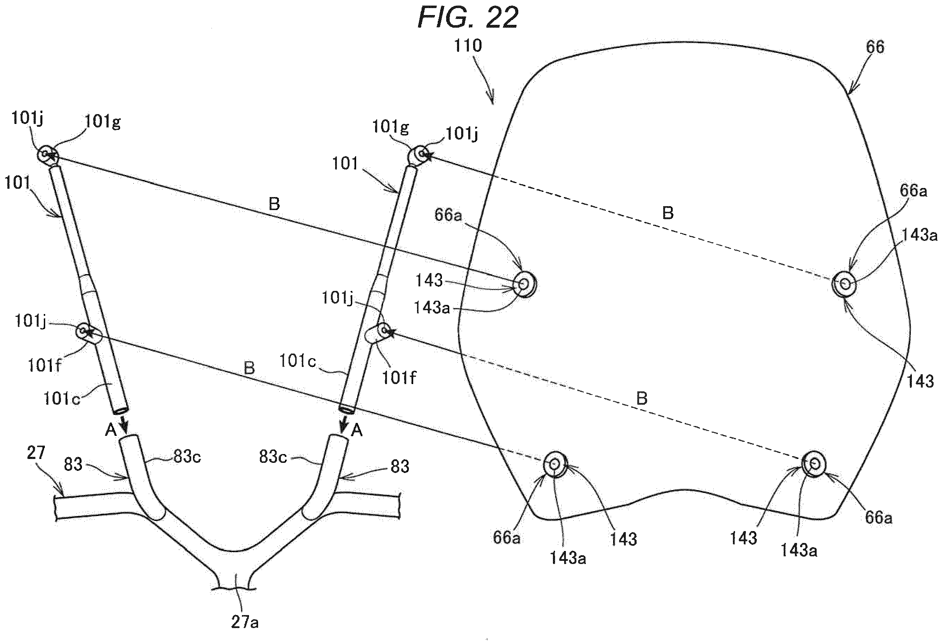

Fig. 22 is an operational view showing the manner of assembling the screen assembly 110 according to the fourth embodiment.

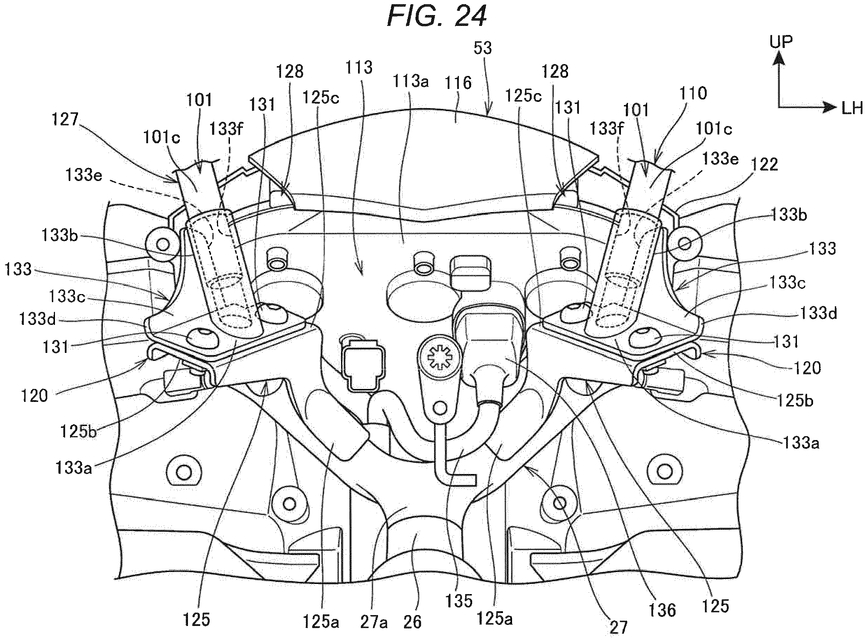

In assembling the screen assembly 110 having an optional specification to a vehicle on which the wide screen 66 is not mounted, firstly, a pair of left and right side covers having the basic specification is removed from an upper cover mounted on an upper portion of a handle cover. Then, in Fig. 22, the large-diameter portions 101c of the screen stays 101 are inserted into the straight portions 83c, 83c of the left and right screen support brackets 83, 83 through left and right opening portions 128, 128 (see Fig. 24) formed after the side cover is removed as indicated by an arrow A. At this stage of operation, the respective screen stays 101 are rotated about the axes and the left and right locking mechanisms 86 (see Fig. 21) are locked.

Next, a plurality of mounting portions 66a mounted on the wind screen 66 (to be more specific, portion of the mounting portions 66a on a back surface side of the wind screen 66) are brought into contact with the lower fastening portion 101f and the upper fastening portion 101g of each of the left and right screen stays 101, 101 as indicated by an arrow B.

The mounting portion 66a is formed of: a through hole formed in the wind screen 66; and a rubber-made grommet 143 having a bolt insertion hole 143a in a center portion and fitted into the through hole formed in the wind screen 66.

Next, bolts 102 (see Fig. 16) are made to pass through the bolt insertion holes 143a formed in the respective grommets 143, and distal end portions of the bolts 102 are threaded into threaded holes 101j formed in the lower fastening portions 101f and the upper fastening portions 101g respectively.

Lastly, the pair of left and right side covers 117, 117 having an optional specification (see Fig. 18) are mounted on an upper portion of the handle cover 53 (see Fig. 18). With this operation, the assembling of the screen assembly 110 is completed.

The left and right cylindrical portions 133b, 133b are disposed in an inverted chevron shape as viewed in a front view and a locking mechanism 86 is mounted on the left and right cylindrical portions 133b, 133b and hence, there is no possibility that lower-end small-diameter portions 101h, 101h of the left and right screen stays 101, 101 are removed from the left and right cylindrical portions 133b, 133b so that the screen assembly 110 is firmly supported.

The screen support bracket 83 is positioned below the side cover 117 and hence, the external appearance can be enhanced.

As has been described with reference to Fig. 16 and Fig. 19, in the screen device 87 or the motorcycle 10 which includes: the screen support brackets 83, 83 which form the pair of left and right brackets fixed to the motorcycle 10 (see Fig. 16) which forms the vehicle; the screen stays 101, 101 which form the pair of left and right stays configured to be joined to the left and right screen support brackets 83, 83; and the wind screen 66 fixed to the left and right screen stays 101, 101, the left and right screen stays 101, 101 and the left and right screen support brackets 83, 83 are joined to each other by inserting either one of the left and right screen stays 101, 101 or the left and right screen support brackets 83, 83 into the corresponding counterpart of the left and right screen stays 101, 101 or the left and right screen support brackets 83, 83, and the left and right screen stays 101, 101 are supported in an inverted chevron shape as viewed in a front view by the left and right screen support brackets 83, 83.

With such a configuration, by merely inserting the screen stays 101, 101 into the screen support brackets 83, 83 and fixing the wind screen 66 to the screen stays 101, 101, it is possible to prevent the screen stays 101, 101 from being removed from the screen support brackets 83, 83. Accordingly, it is unnecessary to provide the particular structure for fixing the screen stay 101 to the screen support bracket 83, and particular members for fixing the screen stay 101 to the screen support bracket 83. Still further, the structure is simple and hence, the wind screen 66 can be easily detachably mounted.

As shown in Fig. 16 and Fig. 19, the screen stay 101 includes the lower fastening portion 101f and the upper fastening portion 101g which form the screen fixing portion to which the wind screen 66 is fixed, and the lower fastening portion 101f and the upper fastening portion 101g are disposed such that the front end surfaces which form the front ends of the lower fastening portion 101f and the upper fastening portion 101g are directed sideward (outward in the vehicle width direction) with respect to a front side (a front side of the vehicle) of the wind screen 66. Accordingly, there is no possibility that a field of view is obstructed by the lower fastening portion 101f and the upper fastening portion 101g and hence, the field of view through the wind screen 66 can be ensured and, at the same time, the wind screen 66 can be firmly supported in a vehicle longitudinal direction and in the vehicle width direction.

As shown in Fig. 20 and Fig. 21, the screen stay 101 and the screen support bracket 83 include the locking mechanism 86 which restricts movement of the screen stay 101 or the screen support bracket 83 in the direction that the screen stay 101 or the screen support bracket 83 is inserted and removed. Accordingly, it is possible to further effectively prevent the screen stay 101 from being removed from the screen support bracket 83 by the locking mechanism 86.

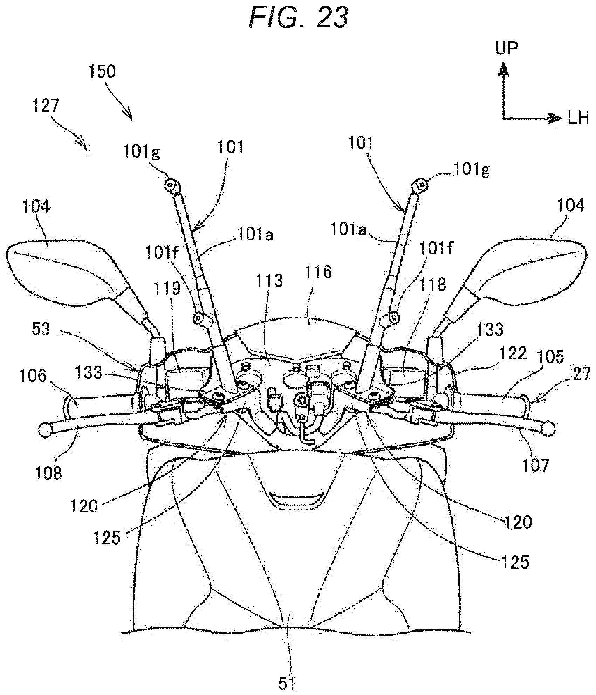

As shown in Fig. 20, the screen support bracket 83 is formed into a cylindrical shape so as to allow insertion of the screen stay 101 into the screen support bracket 83, and is supported by the reinforcing plate 84 which forms the side plate which extends from the vehicle body side (to be more specific, the steering handle 27) of a motorcycle 150 (see Fig. 23). Accordingly, the strength and rigidity of the screen support bracket 83 can be increased by supporting the screen support bracket 83 by the reinforcing plate 84 and hence, the wind screen 66 (see Fig. 16) can be firmly supported.

As shown in Fig. 18 and Fig. 19, the motorcycle 10 further includes the handle cover 53 forming the vehicle body cover which covers the left and right screen support brackets 83, 83. The handle cover 53 includes: the pair of left and right opening portions 128, 128 which allows insertion of the screen stays 101 therethrough; and the side covers 117, 117 which form the pair of left and right sub covers which closes the opening portions 128, 128. Accordingly, by removing the side covers 117, 117, the wind screen 66 can be easily detachably mounted through the opening portions 128, 128.

### <Fifth embodiment>

Fig. 23 is a front view showing a motorcycle 150 equipped with a screen device 127 according to the fifth embodiment. Fig. 23 is also a front view showing a state where the headlight 65 (see Fig. 17) and a front handle cover 121 (see Fig. 17) are removed. Fig. 24 is an enlarged view of a main part shown in Fig. 23. Fig. 24 shows a state where the front cover 51 (see Fig. 1) is also removed. With respect to the fifth embodiment, constitutional parts equal to the constitutional parts of the fourth embodiment are given same symbols, and the detailed explanation of the constitutional parts of the fifth embodiment is omitted.

As shown in Fig. 23, the handle cover 53 has the longitudinally two-split structure (see Fig. 17) and is formed of the front handle cover 121 and a rear handle cover 122.

A pair of left and right screen support portions 120 mounted on the steering handle 27 for supporting the screen assembly 110 (see Fig. 16) is disposed in front of the meter 113.

The screen support portion 120 is formed of pedestals 125 and screen support brackets 133. The left and right screen stays 101, 101 are supported by the left and right screen support brackets 133, 133 in an inverted chevron shape as viewed in a front view.

In the drawing, symbol 118 indicates a left master cylinder which generates a hydraulic pressure by operating a rear wheel brake lever 107, and symbol 119 indicates a right master cylinder which generates a hydraulic pressure by operating a front wheel brake lever 108.

As shown in Fig. 24, the pair of left and right pedestals 125, 125 are fixed to the steering handle 27 connected to an upper end of the steering stem 26 (to be more specific, a portion of the steering handle 27 in the vicinity of the Y-shaped bifurcated portion 27a) by welding, and the screen device 127 is fixed to the pedestals 125, 125.

The screen device 127 is formed of: the left and right screen support brackets 133, 133 mounted on the left and right pedestals 125, 125 by a plurality of bolts 131 respectively; and the screen assembly 110 supported by the left and right screen support brackets 133, 133.

The pedestal 125 is an integral body formed of: a leg portion 125a joined to the steering handle 27 by welding; and a pedestal wall 125b integrally formed with an upper end portion of the leg portion 125a.

The leg portion 125a extends along the steering handle 27 obliquely outward and upward in the vehicle width direction. The pedestal wall 125b has a flat upper surface 125c having a rectangular shape and extending rearward and upward. The upper surface 125c is disposed such that an end portion of the upper surface 125c on an outer side in the vehicle width direction is positioned below an end portion of the upper surface 125c on an inner side in the vehicle width direction.

The steering handle 27 is disposed behind the left and right pedestal walls 125b, 125b and adjacently to the left and right pedestal walls 125b, 125b.

The screen support bracket 133 is formed of: a fixing wall 133a which is fastened to the pedestal wall 125b of the pedestal 125 by the plurality of bolts 131; a cylindrical portion 133b which has one end surface thereof joined to an upper surface of the fixing wall 133a by welding; and a side wall portion 133c which extends upward integrally from one side of the fixing wall 133a on an outer side in the vehicle width direction and is joined to an outer peripheral surface of the cylindrical portion 133b by welding.

The fixing wall 133a has a flat plate shape and a profile of the fixing wall 133a is formed into an approximately rectangular shape. A lower surface of the fixing wall 133a extends rearward and upward while being in contact with an upper surface 125c of the pedestal wall 125b. Further, the fixing wall 133a is disposed such that an end portion of the fixing wall 133a on an outer side in the vehicle width direction is positioned below an end portion of the fixing wall 133a on an inner side in the vehicle width direction.

The steering handle 27 is disposed behind the left and right fixing walls 133a, 133a and adjacently to the left and right fixing walls 133a, 133a.

The cylindrical portion 133b is formed of a straight pipe. In a front view, the cylindrical portion 133b is inclined such that the cylindrical portion 133b is positioned gradually more outside in the vehicle width direction as the cylindrical portion 133b extends toward an upper end from a lower end of the cylindrical portion 133b. That is, the left and right cylindrical portions 133b, 133b are disposed in an inverted chevron shape as viewed in a front view. The side wall portion 133c is a portion which gradually extends upward as the side wall portion 133c extends toward a rear side from a front end 133d thereof. A straight formed rear edge 133e extends along the cylindrical portion 133b, and the rear edge 133e is joined to an outer peripheral surface of the cylindrical portion 133b by welding.

By forming the side wall portion 133c as described above, both the end surface and the outer peripheral surface of the cylindrical portion 133b can be welded and hence, the cylindrical portion 133b can be firmly fixed to the fixing wall 133a and the side wall portion 133c. Further, the fixing wall 133a is inclined frontward and downward and the cylindrical portion 133b is inclined rearward and hence, a whole length of the cylindrical portion 133b can be surely increased. Accordingly, an insertion length that the screen stay 101 is inserted into the cylindrical portion 133b can be increased and hence, the screen stay 101 can be firmly supported by the screen support bracket 133.

A large-diameter portion 101c of the screen stay 101 is formed with a diameter slightly smaller than an inner diameter of the hollow portion 133f formed in the cylindrical portion 133b, and the large-diameter portion 101c is inserted into the hollow portion 133f. A locking mechanism 86 (see Fig. 21A) is provided to the large-diameter portion 101c and the cylindrical portion 133b. The fitting engagement between the large-diameter portion 101c and the cylindrical portion 133b and the locking mechanism 86 are equal to the fitting engagement between the large-diameter portion 101c and the cylindrical portion 133b and the locking mechanism 86 of the fourth embodiment shown in Fig. 21A to Fig. 21C.

The above-mentioned screen stay 101 and screen support bracket 133 may not be provided with the rotation stopping structure which prevents the rotation of the screen stay 101 about an axis and the removal preventing structure.

This is because, in mounting the wind screen 66 (see Fig. 16) on the left and right screen stays 101, 101, the lower fastening portion 101f and the upper fastening portion 101g can be easily aligned with the fastening position of the wind screen 66 by rotating the screen stay 101 inserted into the cylindrical portion 133b about an axis. With such a simple structure, a cost can be suppressed and an operation time can be shortened.

When the pair of side covers 117, 117 of the handle cover 53 is removed (see Fig. 18), a pair of opening portions 128, 128 are formed on both sides of the center cover 116. The left and right screen stays 101, 101 can be inserted into or removed from the cylindrical portions 133b, 133b of the left and right screen support brackets 133, 133 from above through the pair of opening portions 128, 128.

In the drawings, symbol 113a indicates a back surface of the meter 113, symbol 135 indicates a meter-use harness for transmitting electricity and signals to the meter 113, and 136 indicates a connector provided to an end portion of the harness 135 and connected to the meter 113.

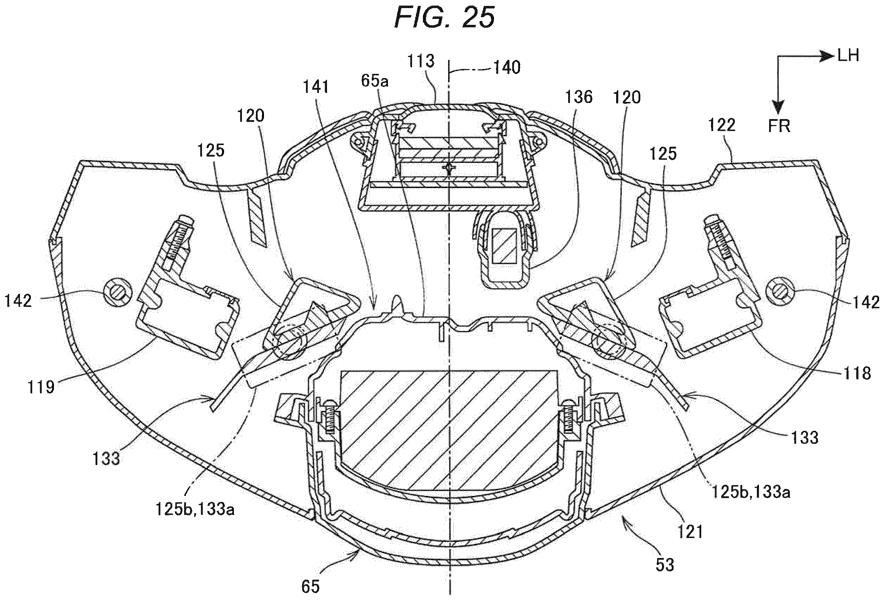

Fig. 25 is a cross-sectional view of the handle cover 53 taken at the same position as a line XXV-XXV in Fig. 16.

Left and right screen support portions 120, 120 each of which is formed of a pedestal 125 and a screen support bracket 133 are disposed in left-and-right symmetry with respect to a vehicle body center line 140 which extends in the longitudinal direction while passing the center of a vehicle body in the vehicle width direction.

The fixing walls 133a, 133a of the left and right screen support brackets 133, 133 and the pedestal walls 125b, 125b of the left and right pedestals 125, 125 are disposed in a chevron shape gradually expanding toward the outside in the vehicle width direction as the fixing walls 133a, 133a and the pedestal walls 125b, 125b extend toward a front side of the vehicle.

The head light 65 is disposed between the left and right screen support portions 120, 120 and on a front side of the vehicle such that the head light 65 is disposed adjacently to the left and right screen support portions 120, 120. A rear wall 65a of the head light 65 is positioned between the left and right screen support portions 120, 120. The left and right screen support portions 120, 120 are disposed along shapes of both side portions of the rear wall 65a.

In this manner, by arranging the left and right screen support portions 120, 120 in a chevron shape as viewed in a plan view, the head light 65 can be disposed in a compact manner in a space 141 disposed in front of the left and right screen support portions 120, 120 in the longitudinal direction of the vehicle including an area between the left and right screen support portions 120, 120. Accordingly, a width of the handle cover 53 in the longitudinal direction can be further decreased and hence, a front portion of the vehicle body can be slimmed down.

Behind the left and right screen support portions 120, 120, a meter 113 and a connector 136 of a harness 135 connected to the meter 113 (see Fig. 20) are disposed.

Outside the left and right screen support portions 120, 120 in the vehicle width direction, a left master cylinder 118 is disposed on the left side adjacently to the left screen support portion 120, and a right master cylinder 119 is disposed on the right side adjacently to the right screen support portion 120.

Symbol 142 indicates mirror mounting portions for back mirrors 104 (see Fig. 16). The back mirrors 104 are disposed on a steering handle 27 (see Fig. 16) side such that the back mirrors 104 are disposed adjacently to the outsides of the left master cylinder 118 and the right master cylinder 119 in the vehicle width direction respectively.

The manner of assembling the above-mentioned screen assembly 110 is described hereinafter.

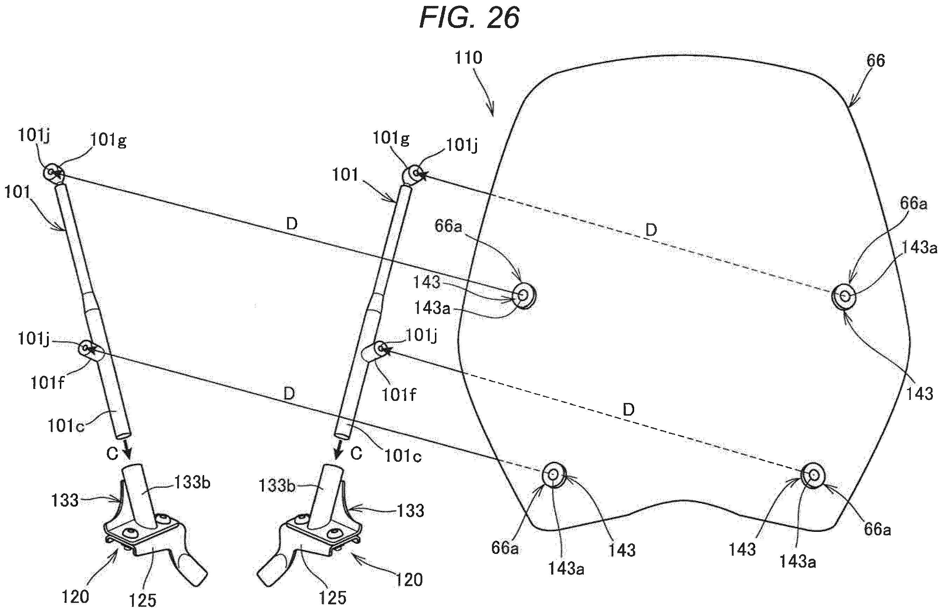

Fig. 26 is an operational view showing the manner of assembling a screen assembly 110 in the fifth embodiment.

In the same manner as the case in the fourth embodiment described with reference to Fig. 22, the side cover of the handle cover is removed. Thereafter, the large-diameter portions 101c of the respective screen stays 101 are inserted into the cylindrical portions 133b, 133b of the left and right screen support brackets 133, 133 as indicated by an arrow C.

Next, a plurality of mounting portions 66a formed on the wind screen 66 (to be more specific, portions of the mounting portions 66a on a back surface side of the wind screen 66) are brought into contact with the lower fastening portions 101f and the upper fastening portions 101g of the respective left and right screen stays 101, 101 as indicated by an arrow D.

Next, the bolts 102 (see Fig. 16) are made to pass through the bolt insertion holes 143a formed in the respective grommets 143, and distal end portions of the bolts 102 are threaded into the threaded holes 101j formed in the lower fastening portions 101f and the upper fastening portions 101g respectively.

Lastly, the pair of left and right side covers 117, 117 (see Fig. 18) having an optional specification are mounted on an upper portion of the handle cover 53 (see Fig. 18). With this operation, the assembling of the screen assembly 110 is completed.

The left and right cylindrical portions 133b, 133b are disposed in an inverted chevron shape as viewed in a front view and a locking mechanism 86 is mounted on the left and right cylindrical portions 133b, 133b and hence, there is no possibility that the large-diameter portions 101c, 101c of the left and right screen stays 101, 101 are removed from the left and right cylindrical portions 133b, 133b so that the screen assembly 110 is firmly supported.

The screen support bracket 133 is positioned below the side cover 117 and hence, the external appearance can be enhanced.

As described above with reference to Fig. 24, the screen support bracket 133 includes: the fixing wall 133a which can be fixed on the motorcycle 150 (see Fig. 23) side as a fixing portion; the cylindrical portion 133b which extends from the fixing wall 133a and allows insertion of the screen stay 101 therethrough as an insertion receiving portion; and the side wall portion 133c which extends from the fixing wall 133a and is joined to the cylindrical portion 133b on a lateral side (vehicle-width-direction outer side) of the wind screen 66. Accordingly, the cylindrical portion 133b can be supported by the side wall portion 133c and hence, strength and rigidity of the screen support bracket 133 can be increased whereby the wind screen 66 can be firmly supported.

Further, as shown in Fig. 24 and Fig. 25, the fixing walls 133a, 133a of the left and right screen support brackets 133, 133 are disposed so as to gradually expand sideward (outside in the vehicle width direction) as the fixing walls 133a, 133a extend toward a front side of the wind screen 66 (see Fig. 16) (front side of the vehicle) as viewed in a plan view. Accordingly, the space 141 between the left and right screen support brackets 133, 133 can be increased whereby parts such as the head light 65 can be arranged in the space 141 easily and in a compact manner. Further, it is possible to firmly support the wind screen 66 which receives a traveling wind from a front side of the vehicle.

The above-mentioned embodiments merely exemplify one mode of the present invention, and various modifications and applications are conceivable as desired without departing from the gist of the present invention.

For example, in the above-mentioned embodiments, as described with reference to Fig. 19 and Fig. 21, the screen stay 101 is inserted into the screen support bracket 83 by setting the inner diameter D2 of the screen support bracket 83 larger than the outer diameter of the screen stay 101. However, the present invention is not limited to such a mode, and the screen support bracket 83 may be inserted into the screen stay 101 by setting the inner diameter of the screen stay 101 larger than the outer diameter of the screen support bracket 83.

Further, as described with reference to Fig. 21C, the large-diameter portion 101c of the screen stay 101 is formed into a circular columnar shape, and the large-diameter portion 101c is inserted into the large diameter hole 83e formed in the straight portion 83c of the screen support bracket 83. However, the present invention is not limited to such a mode, and the large-diameter portion 101c of the screen stay 101 may be formed into a tapered male tapered shape, and the large diameter hole 83e of the straight portion 83c may be formed into a female tapered shape such that the large-diameter portion 101c having a male tapered shape is snugly fitted in the large diameter hole 83e without forming any gap therebetween. In this case, an inclination angle of the screen stay 101 with respect to a perpendicular may be set to an angle which prevents the left and right screen stays 101, 101 mounted on the wind screen 66 from being removed from the left and right straight portions 83c, 83c.

The present invention is not limited to the case where the present invention is applied to the motorcycle 10, and the present invention is also applicable to saddle-ride-type vehicles besides the motorcycle 10. The saddle-ride-type vehicles include vehicles in general where a rider rides on a vehicle body in a straddling manner. That is, the saddle-ride-type vehicles include not only motorcycles (including bicycles equipped with a prime mover) but also three-wheeled vehicles and four-wheeled vehicles which are classified into ATV (all-terrain vehicles).

An explanation of the reference signs used in the drawings is provided below.

- 10, 150, 200:: motorcycle (vehicle)
- 27:: steering handle (support member)
- 53:: handle cover (vehicle body cover)
- 66:: wind screen
- 83, 133, 283, 283A, 301:: screen support bracket (bracket)
- 83b:: curved portion (fixing portion)
- 83c:: straight portion (insertion receiving portion)
- 84:: reinforcing plate (side plate)
- 86:: locking mechanism
- 87, 127, 287:: screen device
- 101, 201, 201A, 311:: screen stay (stay)
- 101f:: lower fastening portion (screen fixing portion)
- 101g:: upper fastening portion (screen fixing portion)
- 117:: side cover (sub cover)
- 125:: pedestal (support member)
- 128:: opening portion
- 133a:: fixing wall (fixing portion)
- 133b:: cylindrical portion (insertion receiving portion)
- 133c:: side wall portion
- 201h, 294b:: female threaded portion (threaded portion)
- 288b, 296b:: lower male threaded portion (threaded portion)
- 288c, 296c:: upper male threaded portion (threaded portion)
- 289, 297:: lock nut (fixing member)
- 313b:: male threaded portion (threaded portion)

## Claims

1. A screen device comprising: a pair of left and right stays (101, 201, 201A, 311) which is configured to be joined to left and right brackets (83, 133, 283, 283A, 301) of a vehicle (10, 200); and a wind screen (66) which is fixed to the left and right stays (101, 201, 201A, 311), wherein
the left and right stays (101, 201, 201A, 311) and the left and right brackets (83, 133, 283, 283A, 301) are joined to each other by inserting either one of the left and right stays (101, 201, 201A, 311) or the left and right brackets (83, 133, 283, 283A, 301) into the corresponding counterpart of the left and right stays (101, 201, 201A, 311) or the left and right brackets (83, 133, 283, 283A, 301),
each stay (101, 201, 201A, 311) includes a screen fixing portion (101f, 101g) to which the wind screen (66) is fixed, the screen fixing portion comprising a lower fastening portion (101f) and an upper fastening portion (101g), **characterised in that**
the lower fastening portion (101f) and the upper fastening portion (101g) are disposed such that front ends of the lower fastening portion (101f) and the upper fastening portion (101g) are directed sideward with respect to a front side of the wind screen (66), and
the left and right stays (101, 201, 201A, 311) are supported in an inverted chevron shape as viewed in a front view by the left and right brackets (83, 133, 283, 283A, 301).

2. The screen device according to claim 1, wherein the left and right brackets (283, 283A, 301) and the stays (201, 201A, 311) respectively include threaded portions (201h, 288b, 288c, 294b, 296b, 296c, 313b) which are respectively threadedly joined to each other, and either one of the bracket (283, 283A, 301) or the stay (201, 201A, 311) is threadedly joined to and inserted into the corresponding counterpart of the bracket (283, 283A, 301) or the stay (201, 201A, 311); and
optionally wherein either one of the left and right brackets (283, 283A, 301) or the stays (201, 201A, 311) includes a fixing member (289, 297) which prevents loosening of the threaded joining between the left and right brackets (283, 283A, 301) and the stays (201, 201A, 311).

3. The screen device according to claim 1 or 2, wherein the stays (101) and the brackets (83, 133) include a locking mechanism (86) which restricts movement of the stays (101) or the brackets (83, 133) in the direction that the stays (101) or the brackets (83, 133) are inserted and removed.

4. The screen device according to claim 1 or 3 wherein each bracket (133) includes:
a fixing portion (133a) which is configured to be fixed to a vehicle body side of the vehicle (10);
an insertion receiving portion (133b) which extends from the fixing portion (133a) and is configured to allow insertion of the stay (101) into the insertion receiving portion (133b); and a side wall portion (133c) which extends from the fixing portion (133a) and is configured to be joined to the insertion receiving portion (133b) on a lateral side of the wind screen (66); and
optionally wherein the fixing portions (133a) of the left and right brackets (133) are disposed so as to gradually expand sideward as the fixing portions (133a) extend toward a front side of the wind screen (66) as viewed in a plan view.

5. A vehicle comprising: a pair of left and right brackets (83, 133, 283, 283A, 301) and a screen device according to claim 1, wherein
the left and right brackets (83, 133, 283, 283A, 301) are fixed to support members (27, 125) disposed on a vehicle body side of the vehicle.

6. The vehicle according to claim 5, wherein the support member is a handle (27) or a pedestal (125) fixed to the handle (27), and the bracket (83, 283, 283A, 301) is disposed in a handle cover (53) which is mounted on the handle (27) and covers the handle (27).

7. The vehicle according to claim 5 or 6, wherein the left and right brackets (283, 283A, 301) and the stays (201, 201A, 311) respectively include threaded portions (201h, 288b, 288c, 294b, 296b, 296c, 313b) which are respectively threadedly joined to each other, and either one of the bracket (283, 283A, 301) or the stay (201, 201A, 311) is threadedly joined to and inserted into the corresponding counterpart of the bracket (283, 283A, 301) or the stay (201, 201A, 311); and
optionally wherein either one of the left and right brackets (283, 283A, 301) and the stays (201, 201A, 311) includes a fixing member (289, 297) which prevents loosening of the threaded joining between the left and right brackets (283, 283A, 301) and the stays (201, 201A, 311).

8. The vehicle according to claim 5, wherein the stays (101) and the brackets (83, 133) include a locking mechanism (86) which restricts movement of the stays (101) or the brackets (83, 133) in the direction that the stays (101) or the brackets (83, 133) are inserted and removed.

9. The vehicle according to claim 5 or 8, wherein each bracket (83) is formed into a cylindrical shape so as to allow insertion of the stay (101) into the bracket (83), and is supported by a side plate (84) which extends from a vehicle body side of the vehicle (10).

10. The vehicle according to claim 5, 8 or 9, wherein each bracket (133) includes: a fixing portion (133a) which is configured to be fixed to a vehicle body side of the vehicle (10); an insertion receiving portion (133b) which extends from the fixing portion (133a) and is configured to allow insertion of the stay (101) into the insertion receiving portion (133b); and a side wall portion (133c) which extends from the fixing portion (133a) and is configured to be joined to the insertion receiving portion (133b) on a lateral side of the wind screen (66); and
optionally wherein the fixing portions (133a) of the left and right brackets (133) are disposed so as to gradually expand toward the outside in the vehicle width direction as the fixing portions (133a) extend toward a front side in the longitudinal direction of the vehicle as viewed in a plan view.

11. The vehicle according to any one of claims 6 to 10, wherein the handle cover (53) which covers the left and right brackets (83, 133) forms a vehicle body cover, and the handle cover (53) includes an opening portion (128) which allows insertion of the stay (101) therethrough, and a sub cover (117) which closes the opening portion (128).

## Patentansprüche

1. Schildvorrichtung, umfassend: ein Paar von linken und rechten Halterungen (101, 201, 201A, 311), das konfiguriert ist, um mit linken und rechten Bügeln (83, 133, 283, 283A, 301) eines Fahrzeugs (10, 200) zusammengefügt zu werden; und einen Windschild (66), der an den linken und rechten Halterungen (101, 201, 201A, 311) befestigt ist, wobei
die linken und rechten Halterungen (101, 201, 201A, 311) und die linken und rechten Bügel (83, 133, 283, 283A, 301) zusammengefügt werden, indem entweder eines von den linken und rechten Halterungen (101, 201, 201A, 311) oder den linken und rechten Bügeln (83, 133, 283, 283A, 301) in das entsprechende Gegenstück der linken und rechten Halterungen (101, 201, 201A, 311) oder der linken und rechten Bügel (83, 133, 283, 283A, 301) eingeführt wird,
wobei jede Halterung (101, 201, 201A, 311) einen Schildbefestigungsabschnitt (101f, 101g) einschließt, an dem der Windschild (66) befestigt ist, wobei der Schildbefestigungsabschnitt einen unteren Befestigungsabschnitt (101f) und einen oberen Befestigungsabschnitt (101g) umfasst, **dadurch gekennzeichnet, dass** der untere Befestigungsabschnitt (101f) und der obere Befestigungsabschnitt (101g) derart angeordnet sind, dass die vorderen Enden des unteren Befestigungsabschnitts (101f) und des oberen Befestigungsabschnitts (101g) seitwärts in Bezug auf eine Vorderseite des Windschilds (66) ausgerichtet sind, und
die linken und rechten Halterungen (101, 201, 201A, 311) von den linken und rechten Bügeln (83, 133, 283, 283A, 301) in einer Vorderansicht in einer umgekehrten Chevron-Form gestützt werden.

2. Schildvorrichtung nach Anspruch 1, wobei die linken und die rechten Bügel (283, 283A, 301) und die Halterungen (201, 201A, 311) jeweils Gewindeabschnitte (201h, 288b, 288c, 294b, 296b, 296c, 313b) einschließen, die jeweils über ein Gewinde zusammengefügt sind, und entweder eines von dem Bügel (283, 283A, 301) oder der Halterung (201, 201A, 311) mit einem Gewinde zusammengefügt wird mit und eingeführt wird in das entsprechende Gegenstück des Bügels (283, 283A, 301) oder der Halterung (201, 201A, 311); und
wobei optional entweder eines von den linken und rechten Bügeln (283, 283A, 301) oder den Halterungen (201, 201A, 311) ein Befestigungselement (289, 297) einschließt, das ein Lösen der Gewindezusammenfügung zwischen dem linken und dem rechten Bügel (283, 283A, 301) und den Halterungen (201, 201A, 311) verhindert.

3. Schildvorrichtung nach Anspruch 1 oder 2, wobei die Halterungen (101) und die Bügel (83, 133) einen Verriegelungsmechanismus (86) einschließen, der die Bewegung der Halterungen (101) oder der Bügel (83, 133) in die Richtung einschränkt, in der die Halterungen (101) oder die Bügel (83, 133) eingeführt und entfernt werden.

4. Schildvorrichtung nach Anspruch 1 oder 3,
wobei jeder Bügel (133) einschließt:
einen Befestigungsabschnitt (133a), der konfiguriert ist, um an einer Fahrzeugkarosserieseite des Fahrzeugs (10) befestigt zu werden; einen Einführaufnahmeabschnitt (133b), der sich von dem Befestigungsabschnitt (133a) erstreckt und konfiguriert ist, um ein Einführen der Halterung (101) in den Einführaufnahmeabschnitt (133b) zu ermöglichen; und einen Seitenwandabschnitt (133c), der sich von dem Befestigungsabschnitt (133a) erstreckt und konfiguriert ist, um mit dem Einführaufnahmeabschnitt (133b) an einer lateralen Seite des Windschilds (66) zusammengefügt zu werden; und
wobei optional die Befestigungsabschnitte (133a) der linken und rechten Bügel (133) so angeordnet sind, um sich allmählich seitwärts auszudehnen, wenn sich die Befestigungsabschnitte (133a) in einer Draufsicht zu einer Vorderseite des Windschilds (66) erstrecken.

5. Fahrzeug, umfassend: ein Paar von linken und rechten Bügeln (83, 133, 283, 283A, 301) und eine Schildvorrichtung nach Anspruch 1, wobei
die linken und rechten Bügel (83, 133, 283, 283A, 301) an Stützelementen (27, 125) befestigt sind, die an einer Fahrzeugkarosserieseite des Fahrzeugs angeordnet sind.

6. Fahrzeug nach Anspruch 5,
wobei das Stützelement ein Lenker (27) oder ein Sockel (125) ist, der an dem Lenker (27) befestigt ist, und der Bügel (83, 283, 283A, 301) in einer Lenkerabdeckung (53) angeordnet ist, die an dem Lenker (27) angebracht ist und den Lenker (27) abdeckt.

7. Fahrzeug nach Anspruch 5 oder 6,
wobei die linken und rechten Bügel (283, 283A, 301) und die Halterungen (201, 201A, 311) jeweils Gewindeabschnitte (201h, 288b, 288c, 294b, 296b, 296c, 313b) einschließen, die jeweils über ein Gewinde zusammengefügt sind, und entweder eines von dem Bügel (283, 283A, 301) oder der Halterung (201, 201A, 311) über ein Gewinde zusammengefügt wird mit und eingeführt wird in das entsprechende Gegenstück des Bügels (283, 283A, 301) oder der Halterung (201, 201A, 311);
und wobei optional entweder eines von den linken und rechten Bügeln (283, 283A, 301) und den Halterungen (201, 201A, 311) ein Befestigungselement (289, 297) einschließt, das ein Lösen der Gewindezusammenfügung zwischen den linken und rechten Bügeln (283, 283A, 301) und den Halterungen (201, 201A, 311) verhindert.

8. Fahrzeug nach Anspruch 5,
wobei die Halterungen (101) und die Bügel (83, 133) einen Verriegelungsmechanismus (86) einschließen, der die Bewegung der Halterungen (101) oder der Bügel (83, 133) in die Richtung einschränkt, in der die Halterungen (101) oder die Bügel (83, 133) eingeführt und entfernt werden.

9. Fahrzeug nach Anspruch 5 oder 8,
wobei jeder Bügel (83) in einer zylindrischen Form ausgebildet ist, um ein Einführen der Halterung (101) in den Bügel (83) zu ermöglichen, und von einer Seitenplatte (84) gestützt wird, die sich von einer Fahrzeugkarosserieseite des Fahrzeugs (10) erstreckt.

10. Fahrzeug nach Anspruch 5, 8 oder 9,
wobei jeder Bügel (133) einschließt: einen Befestigungsabschnitt (133a), der konfiguriert ist, um an einer Fahrzeugkarosserieseite des Fahrzeugs (10) befestigt zu werden; einen Einführaufnahmeabschnitt (133b), der sich von dem Befestigungsabschnitt (133a) erstreckt und konfiguriert ist, um ein Einführen der Halterung (101) in den Einführaufnahmeabschnitt (133b) zu ermöglichen; und einen Seitenwandabschnitt (133c), der sich von dem Befestigungsabschnitt (133a) erstreckt und konfiguriert ist, um mit dem Einführaufnahmeabschnitt (133b) an einer lateralen Seite des Windschilds (66) zusammengefügt zu werden; und
wobei optional die Befestigungsabschnitte (133a) der linken und rechten Bügel (133) so angeordnet sind, um sich allmählich auswärts in der Fahrzeugbreitenrichtung auszudehnen, wenn sich die Befestigungsabschnitte (133a) zu einer Vorderseite in der Längsrichtung des Fahrzeugs in einer Draufsicht erstrecken.

11. Fahrzeug nach einem der Ansprüche 6 bis 10,
wobei die Lenkerabdeckung (53), welche die linken und rechten Bügel (83, 133) abdeckt, eine Fahrzeugkarosserieabdeckung bildet und die Lenkerabdeckung (53) einen Öffnungsabschnitt (128), der ein Einführen der Halterung (101) dadurch ermöglicht, und eine Unterabdeckung (117) einschließt, die den Öffnungsabschnitt (128) schließt.

## Revendications

1. Dispositif de pare-brise comprenant : une paire de montants gauche et droit (101, 201, 201A, 311) qui est configurée pour être assemblée à des supports gauche et droit (83, 133, 283, 283A, 301) d'un véhicule (10, 200) ; et un parebrise (66) qui est fixé aux montants gauche et droit (101, 201, 201A, 311), dans lequel
les montants gauche et droit (101, 201, 201A, 311) et les supports gauche et droit (83, 133, 283, 283A, 301) sont assemblés les uns aux autres par insertion de l'un ou l'autre des montants gauche et droit (101, 201, 201A, 311) ou des supports gauche et droit (83, 133, 283, 283A, 301) dans l'élément homologue correspondant des montants gauche et droit (101, 201, 201A, 311) ou des supports gauche et droit (83, 133, 283, 283A, 301),
chaque montant (101, 201, 201A, 311) inclut une partie de fixation de pare-brise (101f, 101g) à laquelle le pare-brise (66) est fixé, la partie de fixation de pare-brise comprenant une partie d'attache inférieure (101f) et une partie d'attache supérieure (101g), **caractérisé en ce que**
la partie d'attache inférieure (101f) et la partie d'attache supérieure (101g) sont disposées de sorte que les extrémités avant de la partie d'attache inférieure (101f) et de la partie d'attache supérieure (101g) sont dirigées vers le côté par rapport à un côté avant du pare-brise (66), et
les montants gauche et droit (101, 201, 201A, 311) sont supportés dans une forme de chevron inversé comme observé sur une vue avant par les supports gauche et droit (83, 133, 283, 283A, 301).

2. Dispositif de pare-brise selon la revendication 1, dans lequel les supports gauche et droit (283, 283A, 301) et les montants (201, 201A, 311) incluent respectivement des parties filetées (201h, 288b, 288c, 294b, 296b, 296c, 313b) qui sont respectivement assemblées par filetage les unes aux autres, et l'un ou l'autre du support (283, 283A, 301) ou du montant (201, 201A, 311) est assemblé par filetage et inséré dans l'élément homologue correspondant du support (283, 283A, 301) ou du montant (201, 201A, 311) ; et
éventuellement dans lequel l'un ou l'autre des supports gauche et droit (283, 283A, 301) ou des montants (201, 201A, 311) inclut un élément de fixation (289, 297) qui empêche le desserrement de l'assemblage fileté entre les supports gauche et droit (283, 283A, 301) et les montants (201, 201A, 311).

3. Dispositif de pare-brise selon la revendication 1 ou 2, dans lequel les montants (101) et les supports (83, 133) incluent un mécanisme de verrouillage (86) qui limite le mouvement des montants (101) ou des supports (83, 133) dans la direction dans laquelle les montants (101) ou les supports (83, 133) sont insérés et retirés.

4. Dispositif de pare-brise selon la revendication 1 ou 3, dans lequel chaque support (133) inclut :
une partie de fixation (133a) qui est configurée pour être fixée à un côté carrosserie de véhicule du véhicule (10) ; une partie de réception d'insertion (133b) qui s'étend de la partie de fixation (133a) et est configurée pour permettre l'insertion du montant (101) dans la partie de réception d'insertion (133b) ; et une partie de paroi latérale (133c) qui s'étend à partir de la partie de fixation (133a) et est configurée pour être assemblée à la partie de réception d'insertion (133b) sur un côté latéral du pare-brise (66) ; et
éventuellement dans lequel les parties de fixation (133a) des supports gauche et droit (133) sont disposées de façon à s'élargir progressivement vers le côté au fur et à mesure que les parties de fixation (133a) s'étendent vers un côté avant du pare-brise (66) comme observé sur une vue en plan.

5. Véhicule comprenant : une paire de supports gauche et droit (83, 133, 283, 283A, 301) et un dispositif de pare-brise selon la revendication 1, dans lequel
les supports gauche et droit (83, 133, 283, 283A, 301) sont fixés à des éléments de maintien (27, 125) disposés sur un côté carrosserie de véhicule du véhicule.

6. Véhicule selon la revendication 5, dans lequel l'élément de maintien est une poignée (27) ou un socle (125) fixé à la poignée (27), et le support (83, 133, 283, 283A, 301) est disposé dans un cache de poignée (53) qui est monté sur la poignée (27) et couvre la poignée (27).

7. Véhicule selon la revendication 5 ou 6,
dans lequel les supports gauche et droit (283, 283A, 301) et les montants (201, 201A, 311) incluent respectivement des parties filetées (201h, 288b, 288c, 294b, 296b, 296c, 313b) qui sont respectivement assemblées par filetage les unes aux autres, et l'un ou l'autre du support (283, 283A, 301) ou du montant (201, 201A, 311) est assemblé par filetage et inséré dans l'élément homologue correspondant du support (283, 283A, 301) ou du montant (201, 201A, 311) ; et
éventuellement dans lequel l'un ou l'autre des supports gauche et droit (283, 283A, 301) ou des montants (201, 201A, 311) inclut un élément de fixation (289, 297) qui empêche le desserrement de l'assemblage fileté entre les supports gauche et droit (283, 283A, 301) et les montants (201, 201A, 311).

8. Véhicule selon la revendication 5, dans lequel les montants (101) et les supports (83, 133) incluent un mécanisme de verrouillage (86) qui limite le mouvement des montants (101) ou des supports (83, 133) dans la direction dans laquelle les montants (101) ou les supports (83, 133) sont insérés et retirés.

9. Véhicule selon la revendication 5 ou 8, dans lequel chaque support (83) est formé en une forme cylindrique de façon à permettre l'insertion du montant (101) dans le support (83), et est supporté par une plaque latérale (84) qui s'étend à partir d'un côté carrosserie de véhicule du véhicule (10).

10. Véhicule selon la revendication 5, 8 ou 9, dans lequel chaque support (133) inclut :
une partie de fixation (133a) qui est configurée pour être fixée à un côté carrosserie de véhicule du véhicule (10) ; une partie de réception d'insertion (133b) qui s'étend à partir de la partie de fixation (133a) et est configurée pour permettre l'insertion du montant (101) dans la partie de réception d'insertion (133b) ; et une partie de paroi latérale (133c) qui s'étend à partir de la partie de fixation (133a) et est configurée pour être assemblée à la partie de réception d'insertion (133b) sur un côté latéral du pare-brise (66) ; et
éventuellement dans lequel les parties de fixation (133a) des supports gauche et droit (133) sont disposées de façon à s'élargir progressivement vers l'extérieur dans la direction de la largeur du véhicule lorsque les parties de fixation (133a) s'étendent vers un côté avant dans la direction longitudinale du véhicule comme observé sur une vue en plan.

11. Véhicule selon l'une quelconque des revendications 6 à 10,
dans lequel le cache de poignée (53) qui couvre les supports gauche et droit (83, 133) forme un cache de carrosserie de véhicule, et le cache de poignée (53) inclut une partie d'ouverture (128) qui permet l'insertion du montant (101) à travers elle, et un sous-cache (117) qui ferme la partie d'ouverture (128).
